# EUROPEAN PATENT SPECIFICATION

(11) **EP 4 282 919 B1**
(45) Date of publication and mention of the grant of the patent: **16.04.2025**
(21) Application number: 22175410.4
(22) Date of filing: 25.05.2022
(51) Int. Cl.: C08L 69/00

(54) **TRANSPARENT FLAME RETARDANT DUCTILE COMPOSITIONS AND THIN-WALL ARTICLES THEREOF**
TRANSPARENTE FLAMMHEMMENDE DUKTILE ZUSAMMENSETZUNGEN UND DÜNNWANDIGE GEGENSTÄNDE DARAUS
COMPOSITIONS DUCTILES IGNIFUGES TRANSPARENTES ET ARTICLES À PAROIS MINCES CORRESPONDANTS

(43) Date of publication of application: 29.11.2023
(73) Proprietor: SHPP Global Technologies B.V., 4612 PX Bergen op Zoom (NL)
(72) Inventor: Chellamuthu, Manojkumar, Newburgh (US); Anderson, Zachary, Evansville (US); Vollenberg, Peter Hendrikus Theodorus, Evansville (US)
(74) Representative: Balder IP Law, S.L.

(56) References cited:
- WO-A1-2013/175456
- WO-A1-2021/198855
- WO-A1-2022/024073
- US-A1- 2014 206 800

## Description

### BACKGROUND

This disclosure relates to thermoplastic compositions, and in particular to transparent, flame retardant, ductile thermoplastic compositions, methods of manufacture, and uses thereof.

Polycarbonates are useful in the manufacture of articles and components for a wide range of applications, from automotive parts to electronic appliances. Because of their broad use, it is desirable to provide polycarbonates that when molded into transparent articles having thin walls are flame retardant. WO2022024073A1 discloses flame-retardant composition used for e.g. manufacturing electronic or electrical housing components comprises first poly(carbonate-siloxane) copolymer, filler comprising glass, organophosphorus flame retardant, and anti-drip.

There accordingly remains a need in the art for thermoplastic compositions that are flame retardant and provide transparency. It would be a further advantage if the compositions were halogen-free.

### SUMMARY

The above-described and other deficiencies of the art are met by a thermoplastic composition comprising a highly branched polycarbonate comprising 1.5-5.0 mole % branching, wherein the highly branched polycarbonate has a weight average molecular weight of 25,000-45,000 grams per mole, as determined by gel permeation chromatography, according to polystyrene standards and calculated for polycarbonate; a branched polycarbonate comprising 0.1-1.0 mole % branching, wherein the branched polycarbonate has a weight average molecular weight of 25,000-45,000 grams per mole, as determined by gel permeation chromatography, according to polystyrene standards and calculated for polycarbonate; a first poly(carbonate siloxane) having 30-70 wt% siloxane, a second poly(carbonate siloxane) having 5-15 wt% siloxane, and wherein the total siloxane content provided to the thermoplastic composition by the first and second poly(carbonate-siloxanes) is less than 4.17 wt%; and wherein the ratio of the siloxane content provided to the thermoplastic composition by the first poly(carbonate siloxane) to the siloxane content provided to the thermoplastic composition by the second poly(carbonate siloxane) is less than 6.7 to 1, a flame retardant comprising a phosphorous-nitrogen bond; optionally, an auxiliary polycarbonate.

In another aspect, a method of manufacture comprises combining the above-described components to form a thermoplastic composition.

In yet another aspect, an article comprises the above-described thermoplastic composition.

In still another aspect, a method of manufacture of an article comprises molding, extruding, or shaping the above-described thermoplastic composition into an article.

The above described and other features are exemplified by the following detailed description, examples, and claims.

### DETAILED DESCRIPTION

Due to the miniaturization of electronic parts and market trends, there is a need for transparent, flame retardant articles with good processability (i.e., ductility). Branched polycarbonates can be incorporated to impart desirable flame test performance (i.e., V-0 or V-1), but molded articles prepared from branched polycarbonates can be brittle and lack ductility. Poly(carbonate siloxanes) can be added to improve the impact resistance of branched thermoplastic composition s, but it can be challenging to determine the combination of poly(carbonate siloxanes) that improve the ductility of the compositions, without sacrificing transparency. The inventors hereof have discovered that a combination including a first poly(carbonate siloxane) having a siloxane content of 30-70 wt% when used in combination with a second poly(carbonate siloxane) having a siloxane content from 5-15 wt% provide the desired combination of flame test performance and transparency. Advantageously, the first poly(carbonate siloxane) serves as an anti-drip agent, so that the compositions provide the desired flame test performance without adding halogenated anti-drip agents.

Advantageously, the first poly(carbonate siloxane) serves as an anti-drip agent, so that the compositions provide the desired flame test performance in the absence of halogenated anti-drip agents. Due to market trends and governmental regulations, there is increased demand for articles prepared from halogen-free compositions. As used herein, the term "halogen-free" is as defined by IEC 61249-2-21 or UL 746H. According to International Electrochemical Commission, Restriction Use of Halogen (IEC 61249-2-21), a composition should include 900 parts per million (ppm) or less of each of chlorine and bromine and also include 1500 ppm or less of total bromine, chlorine, and fluorine content. According to UL 746H, a composition should include 900 ppm or less of each of chlorine, bromine, and fluorine and 1500 ppm or less of the total chlorine, bromine, and fluorine content. The bromine, chlorine, and fluorine content in ppm may be calculated from the composition or measured by elemental analysis techniques. Conventional flame retardants can include or exclude halogens, but commonly employed anti-drip agents include PTFE-encapsulated styrene-acrylonitrile copolymers (e.g., TSAN) and thus include fluorine. Flame retardants that are not brominated, chlorinated, or fluorinated have been used in conventional thermoplastic compositions, but an anti-drip agent is usually present in combination with the flame retardant, causing the halogen content of the composition to exceed the 1500 ppm total halogen limit per IEC 61249-2-21 and UL 746H. Similarly, when flame retardants that are not brominated or chlorinated, but are fluorinated are used in combination with a fluorinated anti-drip agent, then the halogen content of the composition due to the presence of fluorine exceeds the 1500 ppm total halogen limit per IEC 61249-2-21 or UL 746H. Therefore, it is a particular advantage that the anti-drip agent is non-fluorinated, so that the anti-drip agent does not contribute halogen content to the total halogen content of the compositions.

The thermoplastic compositions includes a highly branched polycarbonate, a flame retardant comprising a phosphorous-nitrogen bond, the above-described combination of poly(carbonate-siloxanes), and optionally, an auxiliary polycarbonate that can include a linear and/or branched polycarbonate different from the highly branched polycarbonate.

"Polycarbonate" as used herein means a polymer having repeating structural carbonate units of formula (1) 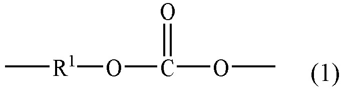
in which at least 60 percent of the total number of R¹ groups contain aromatic moieties and the balance thereof are aliphatic, alicyclic, or aromatic. In an aspect, each R¹ is a C₆₋₃₀ aromatic group, that is, contains at least one aromatic moiety. R¹ can be derived from an aromatic dihydroxy compound of the formula HO-R¹-OH, in particular of formula (2)

   HO-A¹-Y¹-A²-OH (2)
wherein each of A¹ and A² is a monocyclic divalent aromatic group and Y¹ is a single bond or a bridging group having one or more atoms that separate A¹ from A². In an aspect, one atom separates A¹ from A². Preferably, each R¹ can be derived from a bisphenol of formula (3) 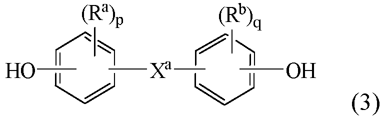
wherein R^{a} and R^{b} are each independently a halogen, C₁₋₁₂ alkoxy, or C₁₋₁₂ alkyl, and p and q are each independently integers of 0 to 4. It will be understood that when p or q is less than 4, the valence of each carbon of the ring is filled by hydrogen. Also in formula (3), X^{a} is a bridging group connecting the two hydroxy-substituted aromatic groups, where the bridging group and the hydroxy substituent of each C₆ arylene group are disposed ortho, meta, or para (preferably para) to each other on the C₆ arylene group. In an aspect, the bridging group X^{a} is single bond, - O-, -S-, -S(O)-, -S(O)₂-, -C(O)-, or a C₁₋₆₀ organic group. The organic bridging group can be cyclic or acyclic, aromatic or non-aromatic, and can further comprise heteroatoms such as halogens, oxygen, nitrogen, sulfur, silicon, or phosphorous. The C₁₋₆₀ organic group can be disposed such that the C₆ arylene groups connected thereto are each connected to a common alkylidene carbon or to different carbons of the C₁₋₆₀ organic bridging group. In an aspect, p and q is each 1, and R^{a} and R^{b} are each a C₁₋₃ alkyl group, preferably methyl, disposed meta to the hydroxy group on each arylene group.

In an aspect, X^{a} is a C₃₋₁₈ cycloalkylidene, a C₁₋₂₅ alkylidene of formula - C(R^{c})(R^{d}) - wherein R^{c} and R^{d} are each independently hydrogen, C₁₋₁₂ alkyl, C₁₋₁₂ cycloalkyl, C₇₋₁₂ arylalkyl, C₁₋₁₂ heteroalkyl, or cyclic C₇₋₁₂ heteroarylalkyl, or a group of the formula - C(=R^{e})- wherein R^{e} is a divalent C₁₋₁₂ hydrocarbon group. Groups of these types include methylene, cyclohexylmethylidene, ethylidene, neopentylidene, and isopropylidene, as well as 2-[2.2.1]-bicycloheptylidene, cyclohexylidene, 3,3-dimethyl-5-methylcyclohexylidene, cyclopentylidene, cyclododecylidene, and adamantylidene.

In another aspect, X^{a} is a C₁₋₁₈ alkylene, a C₃₋₁₈ cycloalkylene, a fused C₆₋₁₈ cycloalkylene, or a group of the formula -J¹-G-J²- wherein J¹ and J² are the same or different C₁₋₆ alkylene and G is a C₃₋₁₂ cycloalkylidene or a C₆₋₁₆ arylene.

For example, X^{a} can be a substituted C₃₋₁₈ cycloalkylidene of formula (4) 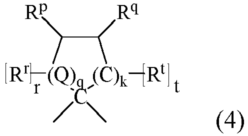 wherein R^{r}, R^{p}, R^{q}, and R^{t} are each independently hydrogen, halogen, oxygen, or C₁₋₁₂ hydrocarbon groups; Q is a direct bond, a carbon, or a divalent oxygen, sulfur, or -N(Z)- where Z is hydrogen, halogen, hydroxy, C₁₋₁₂ alkyl, C₁₋₁₂ alkoxy, C₆₋₁₂ aryl, or C₁₋₁₂ acyl; r is 0 to 2, t is 1 or 2, q is 0 or 1, and k is 0 to 3, with the proviso that at least two of R^{r}, R^{p}, R^{q}, and R^{t} taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and q is 0, the ring as shown in formula (4) contains 4 carbon atoms, when k is 2, the ring as shown in formula (4) contains 5 carbon atoms, and when k is 3, the ring contains 6 carbon atoms. In an aspect, two adjacent groups (e.g., R^{q} and R^{t} taken together) form an aromatic group, and in another aspect, R^{q} and R^{t} taken together form one aromatic group and R^{r} and R^{p} taken together form a second aromatic group. When R^{q} and R^{t} taken together form an aromatic group, R^{p} can be a double-bonded oxygen atom, i.e., a ketone, or Q can be -N(Z)- wherein Z is phenyl.

Bisphenols wherein X^{a} is a cycloalkylidene of formula (4) can be used in the manufacture of polycarbonates containing phthalimidine carbonate units of formula (1a) 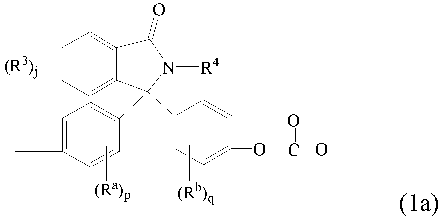
wherein R^{a}, R^{b}, p, and q are as in formula (3), R³ is each independently a C₁₋₆ alkyl, j is 0 to 4, and R₄ is hydrogen, C₁₋₆ alkyl, or a substituted or unsubstituted phenyl, for example a phenyl substituted with up to five C₁₋₆ alkyls. For example, the phthalimidine carbonate units are of formula (1b) 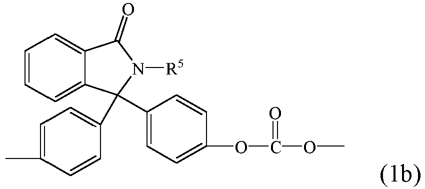
wherein R⁵ is hydrogen, phenyl optionally substituted with up to five 5 C₁₋₆ alkyls, or C₁₋₄ alkyl. In an aspect in formula (1b), R⁵ is hydrogen, methyl, or phenyl, preferably phenyl. Carbonate units (1b) wherein R⁵ is phenyl can be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol ("PPPBP")).

Other bisphenol carbonate repeating units of this type are the isatin carbonate units of formula (1c) and (1d) 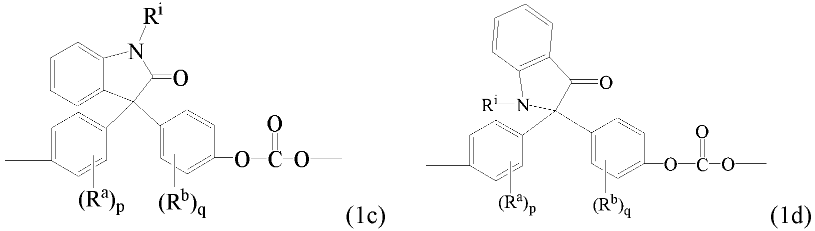 wherein R^{a} and R^{b} are each independently a halogen, C₁₋₁₂ alkoxy, or C₁₋₁₂ alkyl, p and q are each independently 0 to 4, and R¹ is C₁₋₁₂ alkyl, phenyl optionally substituted with 1 to 5 C₁₋₁₀ alkyl, or benzyl optionally substituted with 1 to 5 C₁₋₁₀ alkyl. In an aspect, R^{a} and R^{b} are each methyl, p and q are each independently 0 or 1, and Rⁱ is C₁₋₄ alkyl or phenyl.

Other examples of bisphenol carbonate units derived from of bisphenols (3) wherein X^{a} is a substituted or unsubstituted C₃₋₁₈ cycloalkylidene include the cyclohexylidene-bridged bisphenol of formula (1e) 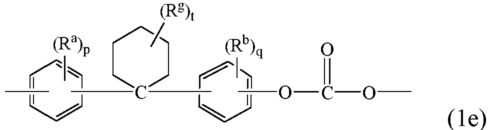 wherein R^{a} and R^{b} are each independently C₁₋₁₂ alkyl, R^{g} is C₁₋₁₂ alkyl, p and q are each independently 0 to 4**,** and t is 0 to 10. In a specific aspect, at least one of each of R^{a} and R^{b} are disposed meta to the cyclohexylidene bridging group. In an aspect, R^{a} and R^{b} are each independently C₁₋₄ alkyl, R^{g} is C₁₋₄ alkyl, p and q are each 0 or 1**,** and t is 0 to 5. In another specific aspect, R^{a}, R^{b}, and R^{g} are each methyl, p and q are each 0 or 1**,** and t is 0 or 3, preferably 0. In still another aspect, p and q are each 0, each R^{g} is methyl, and t is 3, such that X^{a} is 3,3-dimethyl-5-methyl cyclohexylidene.

Examples of other bisphenol carbonate units derived from bisphenol (3) wherein X^{a} is a substituted or unsubstituted C₃₋₁₈ cycloalkylidene include adamantyl units of formula (1f) and fluorenyl units of formula (1g) 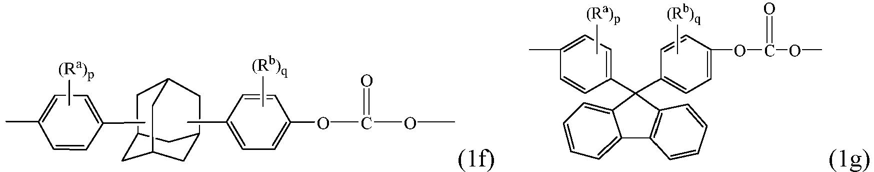 wherein R^{a} and R^{b} are each independently C₁₋₁₂ alkyl, and p and q are each independently 1 to 4. In a specific aspect, at least one of each of R^{a} and R^{b} are disposed meta to the cycloalkylidene bridging group. In an aspect, R^{a} and R^{b} are each independently C₁₋₃ alkyl, and p and q are each 0 or 1; preferably, R^{a}, R^{b} are each methyl, p and q are each 0 or 1, and when p and q are 1, the methyl group is disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-R¹-OH include aromatic dihydroxy compounds of formula (6) 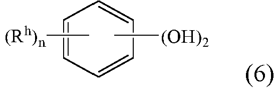 wherein each R^{h} is independently a halogen atom, C₁₋₁₀ hydrocarbyl group such as a C₁₋₁₀ alkyl, a halogen-substituted C₁₋₁₀ alkyl, a C₆₋₁₀ aryl, or a halogen-substituted C₆₋₁₀ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or a combination thereof.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). A combination can also be used. In a specific aspect, the polycarbonate is a linear homopolymer derived from bisphenol A, in which each of A¹ and A² is p-phenylene and Y¹ is isopropylidene in formula (3).

The thermoplastic composition can include a bisphenol A polycarbonate homopolymer, also referred to as a bisphenol A homopolycarbonate. The bisphenol A polycarbonate homopolymer has repeating structural carbonate units of the formula (1).

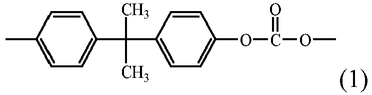

Polycarbonates can be manufactured by processes such as interfacial polymerization and melt polymerization, which are known, and are described, for example, in WO 2013/175448 A1 and WO 2014/072923 A1. An end-capping agent (also referred to as a chain stopper agent or chain terminating agent) can be included during polymerization to provide end groups, for example monocyclic phenols such as phenol, p-cyanophenol, and C₁₋₂₂ alkyl-substituted phenols such as p-cumyl-phenol, resorcinol monobenzoate, and p-and tertiarybutyl phenol, monoethers of diphenols, such as p-methoxyphenol, monoesters of diphenols such as resorcinol monobenzoate, functionalized chlorides of aliphatic monocarboxylic acids such as acryloyl chloride and methacryoyl chloride, and mono-chloroformates such as phenyl chloroformate, alkyl-substituted phenyl chloroformates, p-cumyl phenyl chloroformate, and toluene chloroformate. Combinations of different end groups can be used.

The thermoplastic compositions include a highly branched polycarbonate comprising 1.5-5.0 mole % branching and optionally, an auxiliary branched polycarbonate comprising 0.2-1.0 mole % branching. Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, tris-phenol TC (1,3,5-tris((p-hydroxyphenyl)isopropyl)benzene), tris-phenol PA (4(4(1,1-bis(p-hydroxyphenyl)-ethyl) alpha, alpha-dimethyl benzyl)phenol), 4-chloroformyl phthalic anhydride, trimesic acid, and benzophenone tetracarboxylic acid. Combinations comprising linear polycarbonates and branched polycarbonates can be used.

In some aspects, a particular type of branching agent is used to create branched polycarbonate materials. These branched polycarbonate materials have statistically more than two end groups. The branching agent is added in an amount (relative to the bisphenol monomer) that is sufficient to achieve the desired branching content, that is, more than two end groups. The molecular weight of the polymer can become very high upon addition of the branching agent, and to avoid excess viscosity during polymerization, an increased amount of a chain stopper agent can be used, relative to the amount used when the particular branching agent is not present. The amount of chain stopper used is generally above 5 mole % and less than 20 mole % compared to the bisphenol monomer.

Such branching agents include aromatic triacyl halides, for example triacyl chlorides of formula (20) 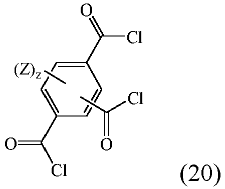
wherein Z is a halogen, C₁₋₃ alkyl, C₁₋₃ alkoxy, C₇₋₁₂ arylalkylene, C₇₋₁₂ alkylarylene, or nitro, and z is 0 to 3; a tri-substituted phenol of formula (21) 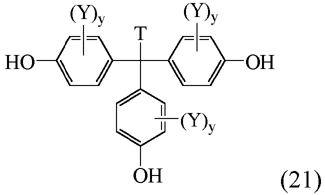
wherein T is a C₁₋₂₀ alkyl, C₁₋₂₀ alkoxy, C₇₋₁₂ arylalkyl, or C₇₋₁₂ alkylaryl, Y is a halogen, C₁₋₃ alkyl, C₁₋₃ alkoxy, C₇₋₁₂ arylalkyl, C₇₋₁₂ alkylaryl, or nitro, s is 0 to 4; or a compound of formula (22) (isatin-bis-phenol). 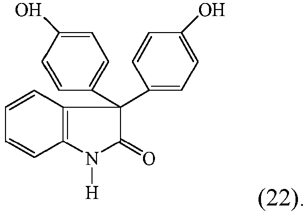
Examples of specific branching agents that are particularly effective in the compositions include trimellitic trichloride (TMTC), tris-p-hydroxyphenylethane (THPE), and isatin-bis-phenol.

The amount of the branching agents used in the manufacture of the polymer will depend on a number of considerations, for example the type of R¹ groups, the amount of chain stopper, e.g., cyanophenol, and the desired molecular weight of the polycarbonate. In general, the amount of branching agent is effective to provide 0.1 to 10 branching units per 100 R¹ units, preferably 0.5 to 8 branching units per 100 R¹ units, and more preferably 0.75 to 5 branching units per 100 R¹ units. For branching agents having formula (20), the branching agent is present in an amount to provide 0.1 to 10 triester branching units per 100 R¹ units, preferably 0.5 to 8, and more preferably 0.75 to 5 triester branching units per 100 R¹ units. For branching agents having formula (21), the branching agent is present in an amount effective to provide 0.1 to 10 triphenyl carbonate branching units per 100 R¹ units, preferably 0.5 to 8, and more preferably 2.5 to 3.5 triphenylcarbonate units per 100 R¹ units.

In an aspect, the highly branched polycarbonate comprising units as described above and comprising 1.5-5 mole % branching, comprises greater than or equal to 3 mole %, based on the total moles of the polycarbonate, of moieties derived from a branching agent; and functional groups derived from an end-capping agent having a pKa between 8.3 and 11. The branching agent can comprise trimellitic trichloride, 1,1,1-tris(4-hydroxyphenyl)ethane or a combination of trimellitic trichloride and 1,1,1-tris(4-hydroxyphenyl)ethane, and the end-capping agent is phenol or a phenol containing a substituent of cyano group, aliphatic groups, olefinic groups, aromatic groups, halogens, ester groups, ether groups, or a combination thereof. In a specific aspect, the end-capping agent is phenol, p-t-butylphenol, p-methoxyphenol, p-cyanophenol, p-cumylphenol, or a combination thereof.

The polycarbonates can have an intrinsic viscosity, as determined in chloroform at 25°C, of 0.3 to 1.5 deciliters per gram (dl/gm), preferably 0.45 to 1.0 dl/gm. The polycarbonates can have a weight average molecular weight (Mw) of 10,000 to 200,000 grams per mole (g/mole), preferably 20,000 to 100,000 g/mole, as measured by gel permeation chromatography (GPC), using a crosslinked styrene-divinylbenzene column according to polystyrene standards and calculated for polycarbonate. GPC samples are prepared at a concentration of 1 mg per ml, and are eluted at a flow rate of 1.5 ml per minute.

When an auxiliary polycarbonate is present and includes a linear homopolycarbonate, more than one linear homopolycarbonate can be present. For example, the linear homopolycarbonate can comprise a bisphenol A homo polycarbonate having a weight average molecular weight of 15,000 to 25,000 g/mole or 17,000 to 23,000 g/mole or 18,000 to 22,000 g/mole, and a bisphenol A homopolycarbonate having a weight average molecular weight of 26,000 to 40,000 g/mole or 26,000 to 35,000 g/mole, each measured by GPC according to polystyrene standards and calculated for polycarbonate. The weight ratio of the linear homopolycarbonates relative to one another is 10:1 to 1:10, preferably 5:1 to 1: 5, more preferably 3:1 to 1:3, or 2:1 to 1:2. The linear homopolycarbonate can be present in an amount of 10 to 99 wt%, or 30-60 wt%, based on the total weight of the thermoplastic composition.

The highly branched polycarbonate comprising 1.5-5.0 mole % branching and the auxiliary polycarbonate can be derived from post-consumer recycled or post-industrial recycled materials or can be produced from at least one monomer derived from bio-based or plastic waste feedstock.

**In** addition to linear homopolycarbonates, a combination of poly(carbonate-siloxane)s is present in the thermoplastic compositions. The polysiloxane blocks of the poly(carbonate-siloxane)s comprise repeating diorganosiloxane units as in formula (10) 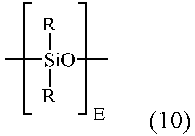 wherein each R is independently a C₁₋₁₃ monovalent organic group. For example, R can be a C₁₋₁₃ alkyl, C₁₋₁₃ alkoxy, C₂₋₁₃ alkenyl, C₂₋₁₃ alkenyloxy, C₃₋₆ cycloalkyl, C₃₋₆ cycloalkoxy, C₆₋₁₄ aryl, C₆₋₁₀ aryloxy, C₇₋₁₃ arylalkylene, C₇₋₁₃ arylalkylenoxy, C₇₋₁₃ alkylarylene, or C₇₋₁₃ alkylaryleneoxy. The foregoing groups can be fully or partially halogenated with fluorine, chlorine, bromine, or iodine, or a combination thereof. In an aspect, where a transparent poly(carbonate-siloxane) is desired, R is unsubstituted by halogen. Combinations of the foregoing R groups can be used in the same copolymer.

The value of E in formula (10) can vary widely depending on the type and relative amount of each component in the thermoplastic composition, the desired properties of the composition, and like considerations. Generally, E has an average value of 2 to 1,000, preferably 2 to 500, 2 to 200, or 2 to 125, 5 to 80, or 10 to 70. In an aspect, E has an average value of 10 to 80 or 10 to 40, and in still another aspect, E has an average value of 40 to 80, or 40 to 70. Where E is of a lower value, e.g., less than 40, it can be desirable to use a relatively larger amount of the poly(carbonate-siloxane) copolymer. Conversely, where E is of a higher value, e.g., greater than 40, a relatively lower amount of the poly(carbonate-siloxane) copolymer can be used. A combination of a first and a second (or more) poly(carbonate-siloxane) copolymers can be used, wherein the average value of E of the first copolymer is less than the average value of E of the second copolymer.

In an aspect, the polysiloxane blocks are of formula (11) 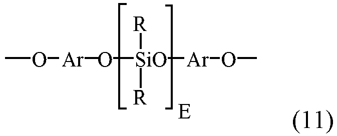 wherein E and R are as defined if formula (10); each R can be the same or different, and is as defined above; and Ar can be the same or different, and is a substituted or unsubstituted C₆₋₃₀ arylene, wherein the bonds are directly connected to an aromatic moiety. Ar groups in formula (11) can be derived from a C₆₋₃₀ dihydroxyarylene compound, for example a dihydroxyarylene compound of formula (3) or (6). Dihydroxyarylene compounds are 1,1-bis(4-hydroxyphenyl) methane, 1,1-bis(4-hydroxyphenyl) ethane, 2,2-bis(4-hydroxyphenyl) propane, 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxyphenyl) cyclohexane, bis(4-hydroxyphenyl sulfide), and 1,1-bis(4-hydroxy-t-butylphenyl) propane.

In another aspect, polysiloxane blocks are of formula (13) 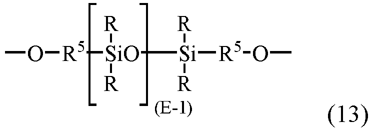
wherein R and E are as described above, and each R⁵ is independently a divalent C₁₋₃₀ organic group, and wherein the polymerized polysiloxane unit is the reaction residue of its corresponding dihydroxy compound. In a specific aspect, the polysiloxane blocks are of formula (14): 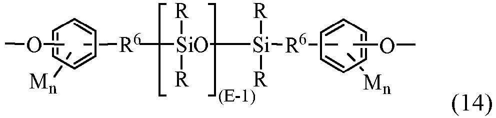
wherein R and E are as defined above. R⁶ in formula (14) is a divalent C₂₋₈ aliphatic group. Each M in formula (14) can be the same or different, and can be a halogen, cyano, nitro, C₁₋₈ alkylthio, C₁₋₈ alkyl, C₁₋₈ alkoxy, C₂₋₈ alkenyl, C₂₋₈ alkenyloxy, C₃₋₈ cycloalkyl, C₃₋₈ cycloalkoxy, C₆₋₁₀ aryl, C₆₋₁₀ aryloxy, C₇₋₁₂ aralkyl, C₇₋₁₂ aralkoxy, C₇₋₁₂ alkylaryl, or C₇₋₁₂ alkylaryloxy, wherein each n is independently 0, 1, 2, 3, or 4.

In an aspect, M is bromo or chloro, an alkyl such as methyl, ethyl, or propyl, an alkoxy such as methoxy, ethoxy, or propoxy, or an aryl such as phenyl, chlorophenyl, or tolyl; R⁶ is a dimethylene, trimethylene or tetramethylene; and R is a C₁₋₈ alkyl, haloalkyl such as trifluoropropyl, cyanoalkyl, or aryl such as phenyl, chlorophenyl or tolyl. In another aspect, R is methyl, or a combination of methyl and trifluoropropyl, or a combination of methyl and phenyl. In still another aspect, R is methyl, M is methoxy, n is one, and R⁶ is a divalent C₁₋₃ aliphatic group. Specific polysiloxane blocks are of the formula 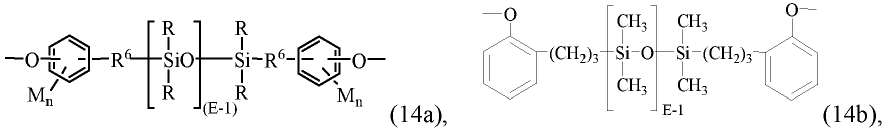 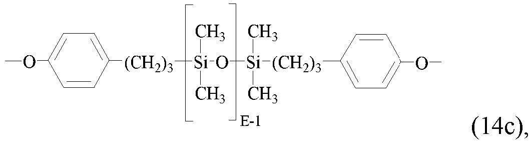 or a combination thereof, wherein E has an average value of 2 to 200, 2 to 125, 5 to 125, 5 to 100, 5 to 50, 20 to 80, or 5 to 20.

Blocks of formula (14) can be derived from the corresponding dihydroxy polysiloxane, which in turn can be prepared effecting a platinum-catalyzed addition between the siloxane hydride and an aliphatically unsaturated monohydric phenol such as eugenol, 2-alkylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol and 2-allyl-4,6-dimethylphenol. The poly(carbonate-siloxane) copolymers can then be manufactured, for example, by the synthetic procedure of European Patent Application Publication No. 0 524 731 A1 of Hoover, page 5, Preparation 2.

Transparent poly(carbonate-siloxane) copolymers comprise carbonate units (1) derived from bisphenol A, and repeating siloxane units (14a), (14b), (14c), or a combination thereof (preferably of formula 14a), wherein E has an average value of 4 to 50, 4 to 15, preferably 5 to 15, more preferably 6 to 15, and still more preferably 7 to 10. The transparent copolymers can be manufactured using one or both of the tube reactor processes described in U.S. Patent Application No. 2004/0039145A1 or the process described in U.S. Patent No. 6,723,864 can be used to synthesize the poly(carbonate-siloxane) copolymers.

A combination of a first and a second poly(carbonate-siloxane) copolymer are included in the thermoplastic compositions. The first poly(carbonate-siloxane) has a siloxane content of 30 to 70 wt%, based on the total weight of the first poly(carbonate-siloxane). Within this range, the poly(carbonate-siloxane) can have a siloxane content of 35 to 70 wt%, or 35 to 65 wt%, or 35-55 wt%, or 35-45 wt%. As used herein, "siloxane content" of a poly(carbonate-siloxane) refers to the content of siloxane units based on the total weight of the poly(carbonate-siloxane). In some aspects, the first poly(carbonate-siloxane) is comprises up to 10 wt%, for example, 0.1-10 wt%, 0.5-10 wt%, 0.5-7 wt%, or 0.5-5 wt% siloxane, based on the total weight of the composition. The second poly(carbonate-siloxane) has a siloxane content of 5 to 15 wt%, based on the total weight of the poly(carbonate-siloxane). Within this range, the poly(carbonate-siloxane) copolymer can have a siloxane content of 5 to 10 wt%. The second poly(carbonate-siloxane) is comprises 4-15 wt%, for example, 7-15 wt% siloxane, based on the total weight of the composition.

In an aspect, a blend is used, in particular a blend of a bisphenol A homopolycarbonate and a poly(carbonate-siloxane) block copolymer of bisphenol A blocks and eugenol capped polydimethylsiloxane blocks, of the formula 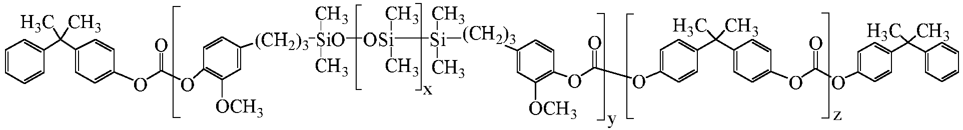 wherein x is 1 to 200, preferably 5 to 85, preferably 10 to 70, preferably 15 to 65, and more preferably 40 to 60; x is 1 to 500, or 10 to 200, and z is 1 to 1000, or 10 to 800. **In** an aspect, x is 1 to 200, y is 1 to 90 and z is 1 to 600, and in another aspect, x is 30 to 50, y is 10 to 30 and z is 45 to 600. The polysiloxane blocks can be randomly distributed or controlled distributed among the polycarbonate blocks.

The poly(carbonate-siloxanes) can be derived from post-consumer recycled or post-industrial recycled materials or can be produced from at least one monomer derived from bio-based or plastic waste feedstock.

The first poly(carbonate-siloxane)s can have a weight average molecular weight of 2,000 to 100,000 grams per mole (g/mole), preferably 5,000 to 50,000 g/mole as measured by GPC using a crosslinked styrene-divinyl benzene column, at a sample concentration of 1 milligram per milliliter, measured according to polystyrene standards and calculated for polycarbonate. In some aspects, the poly(carbonate-siloxane) having a siloxane content of 30 to 70 wt% and the poly(carbonate-siloxane) having a siloxane content of greater than 10 to 30 wt% can each have a weight average molecular weight of at least 25,000 g/mole, preferably 27,000 g/mole. Within this range, the poly(carbonate-siloxane)s can have a weight average molecular weight of 25,000 to 100,000 g/mole, or 25,000 to 50,000 g/mole.

The second poly(carbonate-siloxane) having a siloxane content of 5 to 15 wt% can have a weight average molecular weight of 17,000 to 25,000 g/mole, preferably 19,000 to 25,000 g/mole as measured by GPC using a crosslinked styrene-divinyl benzene column, at a sample concentration of 1 milligram per milliliter, according to polystyrene standards and calculated for polycarbonate.

The combination of poly(carbonate-siloxane)s can be present in the composition in an amount to provide a total siloxane content of less than 4.17 wt%; based on the total weight of the thermoplastic composition.

In some aspects, the siloxane content provided to the thermoplastic compositions by the first poly(carbonate-siloxane) having a siloxane content of 30-70 wt% is greater than the siloxane content provided to the thermoplastic compositions by the second poly(carbonate-siloxane) having a siloxane content of 5-15 wt%. In some aspects, the siloxane content provided to the thermoplastic compositions by the second poly(carbonate-siloxane) having a siloxane content of 5-15 wt% is greater than the siloxane content provided to the thermoplastic compositions by the second poly(carbonate-siloxane) having a siloxane content of 30-70 wt%. The weight ratio of the siloxane content provided to the thermoplastic compositions by the first poly(carbonate-siloxane) to the siloxane content provided to the thermoplastic compositions by the second poly(carbonate-siloxane) is less than about 6.7:1.

The poly(carbonate-siloxane)s can have a melt volume flow rate, measured at 300°C/1.2 kg, of 1 to 50 cubic centimeters per 10 minutes (cc/10 min), preferably 2 to 30 cc/10 min. Combinations of the poly(carbonate-siloxane)s of different flow properties can be used to achieve the overall desired flow property.

The thermoplastic compositions include a flame retardant comprising a phosphorous-nitrogen bond. Flame retardant compounds containing phosphorous-nitrogen bonds include phosphazenes, phosphonitrilic chloride, phosphorous ester amides, phosphoric acid amides, phosphonic acid amides, phosphinic acid amides, and tris(aziridinyl) phosphine oxide. Specific examples include phosphoramides of the formula 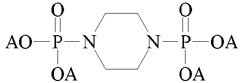 wherein each A moiety is a 2,6-dimethylphenyl moiety or a 2,4,6-trimethylphenyl moiety. These phosphoramides are piperazine-type phosphoramides.

### Phosphazenes (18) and cyclic phosphazenes (19)

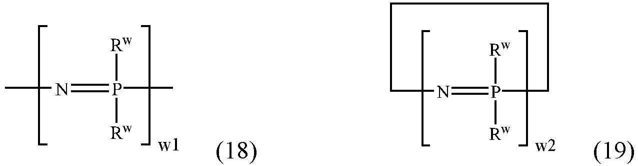

in particular can be used, wherein w1 is 3 to 10,000 and w2 is 3 to 25, preferably 3 to 7, and each R^{w} is independently a C₁₋₁₂ alkyl, alkenyl, alkoxy, aryl, aryloxy, or polyoxyalkylene group. In the foregoing groups at least one hydrogen atom of these groups can be substituted with a group having an N, S, O, or F atom, or an amino group. For example, each R^{w} can be a substituted or unsubstituted phenoxy, an amino, or a polyoxyalkylene group. Any given R^{w} can further be a crosslink to another phosphazene group. Exemplary crosslinks include bisphenol groups, for example bisphenol A groups. Examples include phenoxy cyclotriphosphazene, octaphenoxy cyclotetraphosphazene decaphenoxy cyclopentaphosphazene, and the like. A combination of different phosphazenes can be used. A number of phosphazenes and their synthesis are described in H. R. Allcook, "Phosphorous-Nitrogen Compounds" Academic Press (1972), In the aromatic organophosphorous compounds that have at least one organic aromatic group, the aromatic group can be a substituted or unsubstituted C₃₋₃₀ group containing one or more of a monocyclic or polycyclic aromatic moiety (which can optionally contain with up to three heteroatoms (N, O, P, S, or Si)) and optionally further containing one or more nonaromatic moieties, for example alkyl, alkenyl, alkynyl, or cycloalkyl. The aromatic moiety of the aromatic group can be directly bonded to the phosphorous-containing group, or bonded via another moiety, for example an alkylene group. The aromatic moiety of the aromatic group can be directly bonded to the phosphorous-containing group, or bonded via another moiety, for example an alkylene group. In an aspect the aromatic group is the same as an aromatic group of the polycarbonate backbone, such as a bisphenol group (e.g., bisphenol A), a monoarylene group (e.g., a 1,3-phenylene or a 1,4-phenylene), or a combination comprising at least one of the foregoing. In an aspect, the phosphazene has a structure represented by the formula 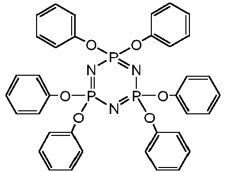 Commercially available phenoxyphosphazenes having the aforementioned structures are LY202 manufactured and distributed by Lanyin Chemical Co., Ltd, FP-110 manufactured and distributed by Fushimi Pharmaceutical Co., Ltd, and SPB-100 manufactured and distributed by Otsuka Chemical Co., Ltd.

The flame retardant comprising a phosphorous-nitrogen bond is present in an amount effective to provide up to 0.6 wt% phosphorous, based on the total weight if the composition. In addition, if halogenated, the phosphorous-containing flame retardants can be present in an amount effective to provide 900 parts per million (ppm) or less of each of chlorine and bromine and also include 1500 ppm or less of total bromine, chlorine, and fluorine content. In some aspects, the halogenated phosphorous-containing flame retardants can be present in an amount effective to provide 900 ppm or less of each of chlorine, bromine, and fluorine and 1500 ppm or less of the total chlorine, bromine, and fluorine content. These values can be calculated or determined by elemental analysis techniques.

The thermoplastic compositions can include branched polycarbonates present in an amount effective to provide a calculated total branching content of 0.4-1.4 mole % and the flame retardant is present in an amount effective to provide 0.2-0.6 wt% phosphorous, each based on the total composition.

An additive composition can be used, comprising one or more additives selected to achieve a desired property, with the proviso that the additive(s) are also selected so as to not significantly adversely affect the flame retardance, transparency, and anti-drip properties of the thermoplastic composition. The additive composition or individual additives can be mixed at a suitable time during the mixing of the components for forming the composition. The additive can be soluble or non-soluble in polycarbonate. The additive composition can include an impact modifier, flow modifier, filler (e.g., a particulate polytetrafluoroethylene (PTFE), glass, carbon, mineral, or metal), reinforcing agent (e.g., glass fibers), antioxidant, heat stabilizer, light stabilizer, ultraviolet (UV) light stabilizer, UV absorbing additive, plasticizer, lubricant, release agent (such as a mold release agent), antistatic agent, anti-fog agent, antimicrobial agent, colorant (e.g, a dye or pigment), surface effect additive, radiation stabilizer, or a combination thereof. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 wt%, or 0.01 to 5 wt%, each based on the total weight of the polymer in the composition.

The thermoplastic composition can include 20-80 wt% of highly branched polycarbonate comprising 1.5-5.0 mole % preferably 2.0-4.0 mole% branching, wherein the highly branched polycarbonate has a weight average molecular weight of 25,000-45,000 grams per mole, as determined by GPC, according to polystyrene standards and calculated for polycarbonate; up to 10 wt% of a first poly(carbonate siloxane) having 30-70 wt% preferably 45-55 wt% siloxane, 4-15 wt% of a second poly(carbonate siloxane) having 5 to 15 wt%, preferably 5-10 wt% siloxane, and a phosphazene flame retardant present in an amount effective to provide up to 0.6 wt% phosphorous; optionally, up to 70 wt% of an auxiliary polycarbonate comprising 5-15 wt% of a branched homopolycarbonate comprising 0.3-1.0 mole %, preferably 0.3-0.5 mole % of a branching agent; up to 70 wt% of a polycarbonate derived from post-consumer recycled or post-industrial recycled material, up to 70 wt% of a polycarbonate different from the branched homopolycarbonate comprising 0.3-1.0 mole % branching agent and the polycarbonate derived from post-consumer recycled or post-industrial recycled material, or a combination thereof.

The thermoplastic compositions can be manufactured by various methods. For example, the powdered polycarbonates, flame retardant, or other optional components are first blended, optionally with fillers in a HENSCHEL-Mixer high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding directly into the extruder at the throat or downstream through a sidestuffer. Additives can also be compounded into a masterbatch with a desired polymeric polymer and fed into the extruder. The extruder is generally operated at a temperature higher than that necessary to cause the composition to flow. The extrudate is immediately quenched in a water bath and pelletized. The pellets so prepared can be one-fourth inch long or less as desired. Such pellets can be used for subsequent molding, shaping, or forming.

Flammability tests were performed following the procedure of Underwriter's Laboratory Bulletin 94 entitled "Tests for Flammability of Plastic Materials for Parts in Devices and Appliances" (ISBN 0-7629-0082-2), Fifth Edition, Dated October 29, 1996, incorporating revisions through and including December 12, 2003. Several ratings can be applied based on the rate of burning, time to extinguish, ability to resist dripping, and whether or not drips are burning. According to this procedure, materials can be classified as HB, V-0, UL-94 V-1, V-2, VA and/or VB.

Shaped, formed, or molded articles comprising the thermoplastic compositions are also provided. The thermoplastic compositions can be molded into useful shaped articles by a variety of methods, such as injection molding, extrusion, rotational molding, blow molding and thermoforming. Some example of articles include computer and business machine housings such as housings for monitors, handheld electronic device housings such as housings for cell phones, electrical connectors, and components of lighting fixtures, ornaments, home appliances, roofs, greenhouses, sun rooms, swimming pool enclosures, and the like. In some aspects, the thermoplastic compositions can be used in articles such as mobile phones, tablets, industrial housings, electric circuit protection, personal safety helmets, electric vehicle supply equipment (EVSE) housings and connectors. In some aspects, the thermoplastic compositions can be used in applications such as industrial, building, and construction, automotive exteriors and interiors, electrical and electronics, sport/leisure, personal accessory, mass transportation, healthcare and consumer. It is also suitable for defense, outdoor lawn and landscape, water management, fossils, electrical devices & displays, specialty vehicles, surgical, ophthalmics, rail, home decoration, home appliances, electrical components and infrastructure, personal recreation, healthcare, patient testing, automotive under the hood, commercial appliance, industrial material handling and aerospace, and the like.

The thermoplastic compositions are further illustrated by the following nonlimiting examples.

### EXAMPLES

The following components are used in the examples. Unless specifically indicated otherwise, the amount of each component is in wt%, based on the total weight of the composition.

The materials shown in Table 1 were used.

**Table 1.**

| Component | Description | Source |
|---|---|---|
| PC-1 | Linear poly(bisphenol A carbonate), Mw = 20,000-22,000 g/mole per GPC using polystyrene standards and calculated for polycarbonate | SABIC |
| PC-2 | Linear bisphenol A polycarbonate, CAS Reg. No, 25971-63-5, having a molecular weight (Mw) of 30,000 - 31,000 g/mole, as determined by GPC and calculated for polycarbonate, produced by interfacial polymerization and endcapped with p-cumylphenol | SABIC |
| B-PC | Branched bisphenol A homopolymer, containing 0.4 mole % 1,1,1-tris(4-hydroxyphenyl)ethane (THPE) branching agent, having a molecular weight (Mw) of 33,000-35,000 g/mole, as determined by GPC using polystyrene standards and calculated for polycarbonate, produced by interfacial polymerization and endcapped with p-cumylphenol | SABIC |
| H-PC | Branched bisphenol A polycarbonate containing about 3 mole % of THPE as branching agent with 4-hydroxy benzonitrile as endcap, having a molecular weight (Mw) of 26,700 - 30,700 g/mole, as determined by GPC using polystyrene standards and calculated for polycarbonate, produced by interfacial polymerization and endcapped with p-cumylphenol | SABIC |
| PCR-PC | Post-consumer recycled or post-industrial recycled polycarbonate | Fenghua Hongyu Plastics Co. |
| PC-Si-6 | PDMS (polydimethylsiloxane)-Bisphenol A polycarbonate copolymer, 6 wt% siloxane, average PDMS block length 45 units (D45), Mw 20,000 to 24,000 g/mole as determined by GPC using polystyrene standards and calculated for polycarbonate, eugenol end-capped | SABIC |
| PC-Si-20 | PDMS (polydimethylsiloxane)-Bisphenol A polycarbonate copolymer, 20 wt% siloxane, average PDMS block length 45 units (D45), Mw 29,000 to 31,000 g/mole as determined by GPC using polystyrene standards and calculated for polycarbonate, eugenol end-capped | SABIC |
| PC-Si-40-1 | Polycarbonate-siloxane copolymer having a siloxane content of 40 wt%, average PDMS block length of 45 units, having a Mw of 37,000 to 38,000 g/mole as determined by GPC using polystyrene standards and calculated for polycarbonate, produced by interfacial polymerization and endcapped with p-cumylphenol | SABIC |
| PC-Si-40-2 | Polycarbonate-siloxane copolymer having a siloxane content of 40 wt%, average PDMS block length of 45 units, having a Mw of about 28,000 to 30,000 g/mole as determined by GPC using polystyrene standards and calculated for polycarbonate, produced by interfacial polymerization and endcapped with p-cumylphenol | SABIC |
| PC-Si-40-3 | Polycarbonate-siloxane copolymer having a siloxane content of 40 wt%, average PDMS block length of 45 units, having a Mw of about 43,000 to 45,000 g/mole, as determined by GPC using polystyrene standards and calculated for polycarbonate, produced by interfacial polymerization and endcapped with p-cumylphenol | SABIC |
| PPZ | Bis(phenoxy)phosphazene oligomer, CAS Reg. No. 28212-48-8; obtained as FP-110 | Fushimi |
| STAB | Phosphite Stabilizer, available as IRGAPHOS 168 | BASF |

The testing samples were prepared as described below and the following test methods were used.

Typical compounding procedures are described as follows: The various formulations were prepared by direct dry-blending of the raw materials and homogenized with a paint shaker prior to compounding. The formulations were compounded on a 26 mm Coperion ZSK co-rotating twin-screw extruder. A typical extrusion profile is listed in Table 2.

**Table 2.**

| Parameters | Unit | 25 mm ZSK |
|---|---|---|
| Feed temperature | °C | 177 |
| Zone 1 temperature | °C | 232 |
| Zone 2-8 temperature | °C | 266 |
| Die temperature | °C | 271 |
| Screw speed | rpm | 400 |
| Throughput | kg/h | 70 |
| Torque | % | 75-80 |

A DEMAG molding machine was used to mold the test parts for standard physical property testing. (for parameters see Table 3).

**Table 3.**

| Parameters | Unit | |
|---|---|---|
| Pre-drying time | h | 4 |
| Pre-drying temperature | °C | 120 |
| Zone 1-3 temperature | °C | 290 |
| Nozzle temperature | °C | 290 |
| Mold temperature | °C | 82 |
| Screw speed | rpm | 100 |
| Back pressure | bar | 3.4 |
| Injection time | s | 1-2 |
| Approx. cycle time | s | 31-35 |

Sample preparation and testing methods are described in Table 4.

**Table 4.**

| Property | Standard | Conditions | Specimen |
|---|---|---|---|
| Melt volume rate (MVR) | ASTM D1238-04 | 300 °C, 1.2kg, 6 min | Pellets |
| High shear viscosity | ISO11443 | 300 °C | Pellets |
| Heat deformation temperature (HDT) | ASTM D648 | 0.45 MPa, 1.82 MPa | 3.18 mm bars |
| Ductility | ASTM 256 | 23°C | 3.18 mm bars |
| Notched Izod Impact Strength | ASTM 256 | 23°C | 3.18 mm bars |
| Tensile properties | ASTM D638 | 23°C, 50 mm/min | 3.18 mm bars |
| Transmission | ASTM D1003 | 23°C | 2.5 mm plaques |
| Haze | ASTM D1003 | 23°C | 2.5 mm plaques |
| Appearance | visual | 23°C | 3.2 mm thick disk, 100 mm diameter |

Flammability tests were performed on samples at a thickness of 1.5 mm, 1.0 mm, and 0.8 mm in accordance with the Underwriter's Laboratory (UL) UL 94 standard. In some cases, a second set of 5 bars was tested to give an indication of the robustness of the rating. In this report the following definitions are used as shown in Table 5. Total flame-out-times for all 5 bars (FOT = t1 + t2) were determined. V-ratings were obtained for every set of 5 bars.

**Table 5**

| | t₁ and/or t₂ | 5-bar FOT | burning drips |
|---|---|---|---|
| V-0 | <10 | <50 | No |
| V-1 | <30 | <250 | No |
| V-2 | <30 | <250 | Yes |
| N.R. (no rating) | >30 | >250 | |

The transparency of each disk was determined by visual inspection. A score of 1-6 was assigned based on the appearance to the naked eye according to Table 6 below.

**Table 6.**

| | |
|---|---|
| Transparent, very clear | 1 |
| Transparent, some haze | 2 |
| Translucent, able to read through | 3 |
| Translucent, significant haze | 4 |
| Translucent, very high haze | 5 |
| Opaque | 6 |

### Examples 1-9

Table 7 shows the compositions and properties for the following comparative examples, indicated with an asterisk.

**Table 7.**

| Item | Unit | 1* | 2* | 3* | 4* | 5* | 6* | 7* | 8* | 9* |
|---|---|---|---|---|---|---|---|---|---|---|
| PC-2 | wt% | 43.84 | 43.84 | 43.84 | 43.84 | 43.84 | 43.84 | 43.84 | 43.84 | 43.84 |
| B-PC | wt% | 14.61 | 14.61 | 14.61 | 14.61 | 14.61 | 9.74 | 9.74 | 9.74 | 9.74 |
| H-PC | wt% | 29.23 | 29.23 | 29.23 | 29.23 | 29.23 | 29.23 | 29.23 | 29.23 | 29.23 |
| PC-Si-40-1 | wt% | 9.74 | 4.87 | 4.87 | ------ | ------ | 9.74 | 9.74 | 4.87 | ------ |
| PC-Si-20 | wt% | ------- | 4.87 | ------ | 9.74 | 4.87 | 4.87 | ------ | 9.74 | 14.61 |
| PC-Si-6 | wt% | ------- | ------ | 4.87 | ----- | 4.87 | ------ | 4.87 | ----- | ----- |
| PPZ | wt% | 2.50 | 2.50 | 2.50 | 2.50 | 2.50 | 2.50 | 2.50 | 2.50 | 2.50 |
| STAB | wt% | 0.08 | 0.08 | 0.08 | 0.08 | 0.08 | 0.08 | 0.08 | 0.08 | 0.08 |
| Total | wt% | 100 | 100 | 100 | 100 | 100 | 100 | 100 | 100 | 100 |
| Total branching | mole % | 1.46 | 1.46 | 1.46 | 1.46 | 1.46 | 1.27 | 1.27 | 1.27 | 1.27 |
| Total Siloxane Content | wt% | 3.90 | 3.90 | 2.24 | 3.90 | 3.90 | 2.24 | 4.19 | 5.85 | 2.92 |
| Siloxane content from PC-Si-40-1 | wt% | 3.90 | 1.95 | 1.95 | ------- | ------- | 3.90 | 3.9 | 1.95 | ------- |
| Siloxane content from PC-Si-20 | wt% | ------- | 1.95 | ------- | 3.90 | 1.95 | 1.95 | ------- | 3.90 | 2.92 |
| Siloxane content from PC-Si-6 | wt% ------ | ------ | ------- | 0.29 | ------- | 0.29 | ------- | 0.29 | ------- | ------- |
| Ratio of Si content provided by PC-Si-40-1: PC-Si-6 | | ------- | ------- | 6.7:1 | ------- | ------- | ------- | 13.4:1 | ------- | ------- |
| MFR (300°C,1.2 kg) | cm³/10 min | 4.4 | 4.8 | 5.6 | 5.4 | 6.4 | 4.9 | 4.7 | 5.1 | 5.5 |
| UL-94, 0.8mm | | V-0 | V-0 | V-2 | V-2 | V-2 | V-0 | V-0 | V-0 | V-0 |
| Appearance, 3.2mm disk | | 6 | 4 | 3 | 6 | 4 | 6 | 5 | 4 | 6 |
| NII, 23 °C | J/m | 839 | 836 | 790 | 788 | 806 | 848 | 781 | 872 | 873 |
| Tg | °C | 146 | 143 | 146 | 143 | 145 | 144 | 145 | 143 | 146 |

Table 7 shows compositions including a combination of linear BPA homopolycarbonate (PC), branched homopolycarbonate (B-PC), highly branched polycarbonate (H-PC) with a 4-hydroxy benzonitrile (HBN) functional group, a poly(carbonate-siloxane) composition including a poly(carbonate siloxane) having a siloxane content of 6 wt%, a poly(carbonate siloxane) having a siloxane content of 20 wt%, a poly(carbonate siloxane) having a siloxane content of 40 wt%, or a combination thereof and a phosphazene flame retardant. The poly(carbonate siloxane)s were used alone and in combination with each other. Comparative Example 1 that includes only PC-Si-40-1 as a poly(carbonate-siloxane) attained a V-0 flame test rating, but failed to provide the transparency rating of 1-3. Comparative Example 4 that includes only PC-Si-20 as a poly(carbonate-siloxane) attained a V-2 flame test rating, and failed to improve the transparency rating. Increasing the loading in the PC-Si-20 only example from 9.74 wt% to 14.61 wt% failed to improve the transparency rating (compare Comparative Example 9 with Comparative Example 6).

Combinations of PC-Si-40-1 and PC-Si-20 also failed to provide the desired flame testing rating of at least V-1 and a transparency rating of 1-3. For instance, the combination of PC-Si-40-1 and PC-Si-20 in a 1:1 weight ratio provided a V-0 flame test rating and improved the transparency rating from 6 to 4 (compare Comparative Example 3 with Comparative Example 1). Increasing the ratio of PC-Si-40-1 to PC-Si-20 from to 2:1 (Comparative Example 7) resulted maintaining the V-0 flame test rating, but the transparency rating was slightly decreased to 5 from 6.

Combinations of PC-Si-40-1 or PC-Si-20 with PC-Si-6 shown in Table 7 also failed to provide the desired flame testing rating of at least V-1 and a transparency rating of 1-3. In fact, the combination of PC-Si-40-1 and PC-Si-6 in a 1:1 weight ratio (see Comparative Example 3) adversely affected the flame test rating as compared with the Comparative Example 1 where PC-Si-40-1 was used alone (i.e., from V-0 to V-2). However, incorporation of PC-Si-6 improved the transparency rating from 6 to 3 (see Comparative Example 3). The combination of PC-Si-20 and PC-Si-6 in a 1:1 weight ratio (see Comparative Example 5) resulted in a modest improvement in the transparency rating (from 6 to 4), but failed to improve the flame test rating.

### Examples 10-17

Table 8 shows the compositions and properties for the following comparative examples and examples. Comparative examples are indicated with an asterisk.

**Table 8.**

| Item | Unit | 10 | 11* | 12* | 13* | 14* | 15* | 16 | 17* |
|---|---|---|---|---|---|---|---|---|---|
| PC-2 | wt% | 43.84 | 43.84 | 43.84 | 43.84 | 48.71 | 48.71 | 48.71 | 48.71 |
| B-PC | wt% | 9.74 | 9.74 | 9.74 | 9.74 | ---- | ---- | ----- | ---- |
| H-PC | wt% | 29.23 | 29.23 | 29.23 | 29.23 | 34.10 | 34.10 | 34.10 | 34.10 |
| PC-Si-40-1 | wt% | 4.87 | ---- | ---- | ---- | 9.74 | ---- | 4.87 | ---- |
| PC-Si-20 | wt% | ---- | 9.74 | 4.87 | ---- | 4.87 | 14.61 | ---- | 4.87 |
| PC-Si-6 | wt% | 9.74 | 4.87 | 9.74 | 14.61 | ---- | ---- | 9.74 | 9.74 |
| PPZ | wt% | 2.50 | 2.50 | 2.50 | 2.50 | 2.50 | 2.50 | 2.50 | 2.50 |
| STAB | wt% | 0.08 | 0.08 | 0.08 | 0.08 | 0.08 | 0.08 | 0.08 | 0.08 |
| Total | wt% | 100 | 100 | 100 | 100 | 100 | 100 | 100 | 100 |
| Properties | | | | | | | | | |
| Total Branching | mole % | 1.27 | 1.27 | 1.27 | 1.27 | 1.02 | 1.02 | 1.02 | 1.02 |
| Total Siloxane content | wt% | 2.53 | 2.24 | 1.56 | 0.88 | 4.88 | 2.92 | 2.53 | 1.56 |
| Siloxane content from PC-Si-40-1 | wt% | 1.95 | ----- | ----- | ----- | 3.90 | ----- | 1.95 | ----- |
| Siloxane content from PC-Si-20 | wt% | ----- | 1.95 | 0.98 | ----- | 0.98 | 2.92 | ----- | 0.974 |
| Siloxane content from PC-Si-6 | wt% | 0.58 | 0.29 | 0.58 | 0.88 | | ----- | 0.58 | 0.58 |
| Ratio of Si content provided by PC-Si-40-1: PC-Si-6 | | 3.4:1 | ----- | ----- | ----- | ----- | ----- | 3.4:1 | ----- |
| MFR, 300 °C, 1.2 kg | cm³/10 min | 6.2 | 6.3 | 6.8 | 7.4 | 5.10 | 5.13 | 7.52 | 8.21 |
| UL-94, 0.8mm | | V-0 | V-0 | V-2 | V-2 | V-2 | V-0 | V-0 | V-0 |
| Appearance, 3.2mm disk | | 3 | 5 | 4 | 1 | 6 | 6 | 3 | 4 |
| NII | J/m | 786 | 798 | 788 | 726 | 830 | 837 | 813 | 815 |
| Tg | °C | 144 | 141 | 139 | 142 | 145 | 145 | 143 | 143 |

Table 8 shows compositions including a combination of linear BPA homopolycarbonate (PC), highly branched polycarbonate (H-PC), a poly(carbonate siloxane composition including PC-Si-6, PC-Si-20, PC-Si-40-1, or a combination thereof, a phosphazene flame retardant, and optionally, a branched homopolycarbonate (B-PC).

In the compositions including B-PC, PC-Si-6 was used alone or in combination with PC-Si-20 or PC-Si-40-1. Comparative Example 14 that includes PC-Si-6 alone, failed to provide the desired flame testing rating or transparency rating (i.e., V-2), but demonstrated a dramatic improvement in the transparency rating (i.e., 1). When used in combination with PC-Si-20, at a 2:1 weight ratio of PC-Si-20 to PC-Si-6, this resulted in retention of the V-0 flame test rating and a decrease in the transparency rating (from 3 to 5) (compare Example 11 with Comparative Example 12), whereas a 1:2 weight ratio resulted in a loss in the flame test rating and a decrease in the transparency rating (compare Example 11 with Comparative Example 13). The combination of PC-Si-40-1 with PC-Si-6 in a 1:2 ratio provided the desired combination of properties. When B-PC was not present, similar trends were observed for the various combinations of poly(carbonate-siloxane)s as compared with compositions where B-PC was present.

Table 9 shows the compositions and properties for the following comparative examples and examples. Comparative examples are indicated with an asterisk.

**Table 9.**

| Item | Unit | 19* | 20* | 21* | 22 | 23* |
|---|---|---|---|---|---|---|
| PC-2 | wt% | 43.61 | 43.61 | 43.61 | 43.61 | 43.61 |
| B-PC | wt% | 9.69 | 9.69 | 9.69 | 9.69 | 9.69 |
| H-PC | wt% | 29.08 | 29.08 | 29.08 | 29.08 | 29.08 |
| PC-Si-40-1 | wt% | 9.69 | 9.69 | ------ | 4.85 | ------ |
| PC-Si-20 | wt% | 4.85 | ------ | 14.54 | ------ | ----- |
| PC-Si-6 | wt% | ----- | 4.85 | ----- | 9.69 | 14.54 |
| PPZ | wt% | 3.00 | 3.00 | 3.00 | 3.00 | 3.00 |
| STAB | wt% | 0.08 | 0.08 | 0.08 | 0.08 | 0.08 |
| Total | wt% | 100 | 100 | 100 | 100 | 100 |
| Properties | | | | | | |
| Total Branching | mole % | 0.91 | 0.91 | 0.91 | 0.91 | 0.91 |
| Total Siloxane content | wt% | 4.85 | 4.17 | 2.92 | 2.52 | 0.87 |
| Siloxane content from PC-Si-40-1 | wt% | 3.88 | 3.88 | -------- | 1.94 | -------- |
| Siloxane content from PC-Si-20 | wt% | 0.97 | -------- | 2.91 | -------- | -------- |
| Siloxane content from PC-Si-6 | wt% | -------- | 0.29 | -------- | 0.58 | 0.87 |
| Ratio of Si content of PC-Si-40-1: PC-Si-6 | | -------- | 13.4:1 | -------- | 3.3:1 | -------- |
| MFR (300°C, 1.2 kg) | cm³/10 min | 4.9 | 5.2 | 5.5 | 6.4 | 7.6 |
| UL-94, 0.8mm | | V-0 | V-0 | V-0 | V-0 | V-2 |
| Appearance, 3.2mm disk | | 6 | 4 | 6 | 2 | 1 |
| NII | J/m | 862 | 860 | 875 | 850 | 725 |
| Tg | °C | 142 | 143 | 145 | 141 | 142 |

Table 9 shows compositions including a combination of linear BPA homopolycarbonate (PC-2), a branched homopolycarbonate (B-PC), highly branched polycarbonate (H-PC), a poly(carbonate siloxane composition including PC-Si-6, PC-Si-20, PC-Si-40-1, or a combination thereof, and a higher loading of flame retardant than was used in the compositions of Tables 7 and 8. Similar trends were observed for the 2.5 wt% and 3 wt% PPZ compositions.

Table 10 shows the compositions and properties for the following examples.

**Table 10.**

| Formulation | | 24 | 25 | 26 | 27 | 28 | 29 | 30 | 31 | 32 |
|---|---|---|---|---|---|---|---|---|---|---|
| PC-2 | wt % | 43.62 | 43.62 | 43.62 | 43.62 | 43.62 | 43.62 | 43.62 | 43.62 | 43.62 |
| B-PC | wt % | 9.70 | 9.70 | 9.70 | 9.70 | 9.70 | 9.70 | 9.70 | 9.70 | 9.70 |
| H-PC | wt % | 29.10 | 29.10 | 29.10 | 29.10 | 29.10 | 29.10 | 29.10 | 29.10 | 29.10 |
| PC-Si-6 | wt % | 9.70 | 12.50 | 13.50 | 9.70 | 12.50 | 13.50 | 9.70 | 12.50 | 13.50 |
| PC-Si-40-2 | wt % | 4.80 | 2.00 | 1.00 | ------- | ------- | ------- | ------- | ------- | ------- |
| PC-Si-40-1 | wt % | ------- | ------- | ------- | 4.80 | 2.00 | 1.00 | ------- | ------- | ------- |
| PC-Si-40-3 | wt % | ------- | ------- | ------- | ------- | ------- | ------- | 4.80 | 2.00 | 1.00 |
| STAB | wt % | 0.08 | 0.08 | 0.08 | 0.08 | 0.08 | 0.08 | 0.08 | 0.08 | 0.08 |
| Total Weight | wt % | 100 | 100 | 100 | 100 | 100 | 100 | 100 | 100 | 100 |
| Properties | | | | | | | | | | |
| Total siloxane content | wt % | 2.48 | 1.55 | 1.21 | 2.48 | 1.55 | 1.21 | 2.48 | 1.55 | 1.21 |
| Total branching | mol e % | 0.91 | 0.91 | 0.91 | 0.91 | 0.91 | 0.91 | 0.91 | 0.91 | 0.91 |
| PPZ | wt % | 3.00 | 3.00 | 3.00 | 3.00 | 3.00 | 3.00 | 3.00 | 3.00 | 3.00 |
| Siloxane content from PC-Si-6 | wt % | 0.58 | 0.75 | 0.81 | 0.58 | 0.75 | 0.81 | 0.58 | 0.75 | 0.81 |
| Ratio of Si content provided by PC-Si-40-1, -2,and -3: PC-Si-6 | wt % | 3.28:1 | 1.1:1 | 1:2 | 3.28:1 | 1.1:1 | 1:2 | 3.28:1 | 1.1:1 | 1:2 |
| Glass Transition Temp | °C | 140 | 141 | 140 | 118 | 145 | 140 | 143 | 142 | 142 |
| Melt Viscosity - ISO11443 at apparent shear rate 640/s | Pa·s | 587 | 564 | 572 | 611 | 551 | 593 | 609 | 585 | 583 |
| UL94 Flame Class Rating at 0.8mm | - | V-1 | V-0 | V-1 | V-0 | V-0 | V-1 | V-0 | V-1 | V-0 |
| Number of dripping parts (all 10 tested parts) | # | 0 | 2 | 1 | 0 | 0 | 3 | 0 | 0 | 0 |
| Total FOT (all 10 tested parts) | s | 67 | 84 | 64 | 36 | 39 | 67 | 30 | 50 | 25 |
| UL94 Flame Test Rating at 0.6 mm | | V-0 | V-2 | V-2 | V-1 | V-0 | V-0 | V-1 | V-2 | V-0 |
| Number of dripping parts (all 10 tested parts) | # | 2 | 8 | 10 | 0 | 5 | 13 | 0 | 4 | 6 |
| Total FOT (all 10 tested parts) | s | 269 | 228 | 230 | 104 | 92 | 248 | 120 | 144 | 298 |
| Max FOT (all 10 tested parts) | s | 35 | 28 | 25 | 15 | 10 | 35 | 15 | 15 | 35 |
| Notched Izod at 23°C - ASTM - Impact Strength | J/m | 859 | 834 | 822 | 843 | 849 | 818 | 838 | 832 | 843 |
| Notched Izod at 23°C - ASTM - Ductility | % | 100 | 100 | 100 | 100 | 100 | 100 | 100 | 100 | 100 |
| Notched Izod at 0°C - ASTM - Impact Strength | J/m | 707 | 607 | 200 | 760 | 651 | 264 | 779 | 705 | 693 |
| Notched Izod at 0°C - ASTM - Ductility | % | 100 | 100 | 0 | 100 | 100 | 20 | 100 | 100 | 100 |
| Notched Izod at - 30°C - ASTM - Impact Strength | J/m | 191 | 153 | X | 392 | 168 | 160 | 577 | 179 | 189 |
| Notched Izod at - 30°C - ASTM - Ductility | % | 0 | 0 | X | 0 | 0 | 0 | 100 | 0 | 0 |
| Transmission, 2.5mm thick part | % | 72.6 | 84.2 | 88.1 | 65.4 | 80.1 | 85.2 | 68.1 | 79.4 | 79.4 |
| Haze, 2.5mm thick part | % | 17.1 | 4.4 | 2.2 | 32.3 | 7.2 | 3.6 | 26.9 | 8.1 | 8.1 |
| Transmission, 0.8mm thick part | % | 88.3 | 90.7 | 91.6 | 85.6 | 89.6 | 91.1 | 85.4 | 89.0 | 89.1 |
| Haze, 0.8mm thick part | % | 3.8 | 1.6 | 1.1 | 7.1 | 2.3 | 1.5 | 7.2 | 2.7 | 2.6 |
| Tensile test - ASTM D 638 , Uniaxial tensile test | | | | | | | | | | |
| Modulus of Elasticity | MP a | 2178 | 2194 | 2210 | 2142 | 2190 | 2174 | 2134 | 2164 | 2164 |
| Tensile Strength at Yield | MP a | 60.2 | 61.4 | 61.4 | 59.1 | 60.1 | 60.5 | 58.5 | 59.6 | 59.9 |
| Tensile Strength at Break | MP a | 58.5 | 61.4 | 62.2 | 58.6 | 58.3 | 58.8 | 59 | 52.8 | 60 |
| %Elongation at Yield | % | 6.3 | 6.3 | 6.4 | 6.2 | 6.3 | 6.3 | 6.2 | 6.2 | 6.3 |
| %Elongation at Break | % | 96 | 103 | 102 | 100 | 97 | 101 | 98 | 76 | 98 |
| After exposure to BANANA BOAT sunscreen at 1% Strain, for 3 days, at room temperature: | | | | | | | | | | |
| Tensile Strength at Yield | MP a | 60.5 | 12 | 37 | 60.8 | 61.3 | 37 | 59.8 | 25 | 37 |
| Elongation at Break | % | 93 | 20 | 55 | 94 | 94 | 59 | 97 | 36 | 57 |
| Retention of Tensile Strength at Yield | % | 100 | 20** | 60** | 103 | 102 | 61** | 102 | 41** | 61** |
| Retention of Elongation at Break | % | 98 | 19** | 54** | 94 | 97 | 58** | 99 | 47** | 58** |

The compositions of Tables 7-9 established that the combination of PC-Si-40-1 and PC-Si-6, wherein the loading of PC-Si-6 is greater than PC-Si-40-1 provides the desired combination of flame test rating of V-0 and transparency rating of 1-3. The compositions of Table 9 show the effect of varying the ratio to a ratio greater than 2:1 (PC-Si-6 to PC-Si-40-1) and varying the molecular weight of the poly(carbonate siloxane) having a siloxane content of 40 wt% (i.e., PC-Si-40-1 to PC-Si-40-3). The total siloxane content of the compositions ranged from 1.21 wt% to 2.5 wt%. All of the examples provided at least a rating of V-1 at 0.8 mm and % transmission of at least 65%. Examples 24, 27, 28 and 30 provided good chemical resistance, whereas Examples 25-26, 29, and 31-32 did not, as indicated by two asterisks.

Table 11 shows the flow properties for select compositions. Comparative examples are indicated with an asterisk.

**Table 11.**

| Formulation | DSC, T_{g} (°C) | MFR, 300°C @ 1.2kg (cm³/10min) | Spiral Flow Condition 60mil; 555°F,180°F (in.) |
|---|---|---|---|
| PC-2 | 153.62 | 7.2 | 4.75 |
| B-PC | 154.22 | 1.1 | 4.0 |
| H-PC | 144.04 | 10.9 | 9.5 |
| 6* | 142.5 | 4.7 | 6.5 |
| 9* | 142.3 | 5.9 | 6.5 |
| 10 | 142.2 | 6.5 | 6.75 |
| 12* | 142 | 7.9 | 6.75 |

Table 11 shows the flow properties for each of PC-2, B-PC, and H-PC alone as compared with Comparative Exampled 6, 9, and 12 and Example 10. It was confirmed that Example 10 has a good combination of MFR and spiral flow. In particular, the MFR is similar to that of PC-2 alone, but the spiral flow length was increased by 2 inches.

Table 12 shows the properties for the following comparative examples and examples. Comparative examples are indicated with an asterisk.

**Table 12.**

| Formulation | | 33* | 34* | 35* | 36* | 37* | 38* | 39 | 40 | 41 |
|---|---|---|---|---|---|---|---|---|---|---|
| PC-2 | wt% | 33.92 | 24.23 | 14.54 | 33.92 | 24.23 | 14.54 | 33.92 | 24.23 | 14.54 |
| B-PC | wt% | 9.69 | 9.69 | 9.69 | 9.69 | 9.69 | 9.69 | 9.69 | 9.69 | 9.69 |
| H-PC | wt% | 29.08 | 29.08 | 29.08 | 29.08 | 29.08 | 29.08 | 29.08 | 29.08 | 29.08 |
| PCR-PC | wt% | 9.69 | 19.38 | 29.08 | 9.69 | 19.38 | 29.08 | 9.69 | 19.38 | 29.08 |
| PC-Si-6 | wt% | 4.85 | 4.85 | 4.85 | ------ | ------ | ------ | 9.69 | 9.69 | 9.69 |
| PC-Si-20 | wt% | ------ | ------ | ------ | 14.54 | 14.54 | 14.54 | ------ | ------ | ------ |
| PC-Si-40-1 | wt% | 9.69 | 9.69 | 9.69 | ------ | ------ | ------ | 4.85 | 4.85 | 4.85 |
| PPZ | wt% | 3.00 | 3.00 | 3.00 | 3.00 | 3.00 | 3.00 | 3.00 | 3.00 | 3.00 |
| STAB | wt% | 0.08 | 0.08 | 0.08 | 0.08 | 0.08 | 0.08 | 0.08 | 0.08 | 0.08 |
| Total | wt% | 100 | 100 | 100 | 100 | 100 | 100 | 100 | 100 | 100 |
| Properties | | | | | | | | | | |
| Total branching | mole % | 0.91 | 0.91 | 0.91 | 0.91 | 0.91 | 0.91 | 0.91 | 0.91 | 0.91 |
| Siloxane content from PC-Si-40-1 | wt% | 3.88 | 3.88 | 3.88 | ------ | ------ | ------ | 1.94 | 1.94 | 1.94 |
| Siloxane content from PC-Si-6 | wt% | 0.29 | 0.29 | 0.29 | ------ | ------ | ------ | 0.58 | 0.58 | 0.58 |
| Ratio of Si content provided by PC-Si-40-1: PC-Si-6 | | 13.4:1 | 13.4:1 | 13.4:1 | ------ | ------ | ------ | 3.35:1 | 3.35:1 | 3.35:1 |
| Total siloxane content | wt% | 4.17 | 4.17 | 4.17 | 2.91 | 2.91 | 2.91 | 2.52 | 2.52 | 2.52 |
| Tg | °C | 143 | 143 | 138 | 141 | 142 | 138 | 140 | 136 | 141 |
| MFR, 300°C, 1.2 kg | cm³/10 min | 5.3 | 6.2 | 7.0 | 6.7 | 6.8 | 7.5 | 7.2 | 8.4 | 8.3 |
| UL94 Flame Test Rating at 0.8mm | - | V-0 | V-0 | V-0 | V-0 | V-0 | V-0 | V-0 | V-0 | V-0 |
| UL94 Flame Test Rating at 1.5mm | | V-0 | V-0 | V-0 | V-0 | V-0 | V-0 | V-0 | V-0 | V-0 |
| NII, 23°C, Impact Strength | J/m | 859 | 838 | 833 | 873 | 857 | 842 | 844 | 845 | 808 |
| NII, 23°C, Ductility | % | 100 | 100 | 100 | 100 | 100 | 100 | 100 | 100 | 100 |
| Transmission, 0.8mm thick part | % | 75 | 76 | 75 | 73 | 71 | 70 | 83 | 84 | 85 |
| Haze, 0.8mm thick part | % | 28 | 27 | 29 | 39 | 44 | 45 | 10 | 9 | 7 |

Table 12 shows compositions that include post-consumer recycled polycarbonate (PCR-PC). The results are consistent with the compositions not having PCR-PC in that the 1:2 weight ratio of PC-Si-40-1 to PC-Si-6 provided the desired combination of a V-0 flame test rating and transparency.

This disclosure further encompasses the following aspects.

Aspect 1. A thermoplastic composition comprising a highly branched polycarbonate comprising 1.5-5.0 mole % branching, wherein the highly branched polycarbonate has a weight average molecular weight of 25,000-45,000 grams per mole, as determined by gel permeation chromatography, according to polystyrene standards and calculated for polycarbonate; a branched polycarbonate comprising 0.1-1.0 mole % branching, wherein the branched polycarbonate has a weight average molecular weight of 25,000-45,000 grams per mole, as determined by gel permeation chromatography, according to polystyrene standards and calculated for polycarbonate; a first poly(carbonate siloxane) having 30-70 wt% siloxane, a second poly(carbonate siloxane) having 5-15 wt% siloxane, and wherein the total siloxane content provided to the thermoplastic composition by the first and second poly(carbonate-siloxanes) is less than 4.17 wt%; and wherein the ratio of the siloxane content provided to the thermoplastic composition by the first poly(carbonate siloxane) to the siloxane content provided to the thermoplastic composition by the second poly(carbonate siloxane) is less than 6.7 to 1, a flame retardant comprising a phosphorous-nitrogen bond; optionally, an auxiliary polycarbonate.

Aspect 2. The thermoplastic composition of aspect 1, wherein the calculated bromine and chlorine content of the thermoplastic composition are each 900 ppm or less and the calculated total halogen content of the thermoplastic composition is 1500 ppm or less; or the calculated bromine, chlorine, and fluorine content of the thermoplastic composition are each 900 ppm or less and the calculated total bromine, chlorine, and fluorine content of the thermoplastic composition is 1500 ppm or less.

Aspect 3. The thermoplastic composition of aspect 1 or aspect 2, wherein a molded sample of the composition has a percent transmission of at least 80% as determined according to ASTM D1003 on a molded sample having a thickness of 0.8 mm, a UL94 flame test rating of V-0 or V-1 on a molded sample having a thickness of 0.8 mm, and a Notched Izod Impact strength of at least 600 Joules per meter as determined according to ASTM 256 at 23 °C.

Aspect 4. The thermoplastic composition of any one of the preceding aspects comprising 20-80 wt% of a highly branched polycarbonate comprising 1.5-5.0 mole % branching, wherein the highly branched polycarbonate has a weight average molecular weight of 25,000-45,000 g/mole, as determined by gel permeation chromatography, according to polystyrene standards and calculated for polycarbonate; up to 10 wt% of a first poly(carbonate siloxane) having 30-70 wt% siloxane, 4-15 wt% of a second poly(carbonate siloxane) having 5 to 15 wt% siloxane, and a flame retardant comprising a phosphorous-nitrogen bond present in an amount effective to provide up to 0.6 wt% phosphorous, based on the total weight of the composition; optionally, up to 70 wt% of an auxiliary polycarbonate.

Aspect 5. The thermoplastic composition of any one of the preceding aspects, wherein the functional groups are derived from an end-capping agent having a pKa between 8.3 and 11.

Aspect 6. The thermoplastic composition of any one of the preceding aspects, wherein the functional groups comprise a phenol substituted with a cyano group, an olefin group, a halogen, an ester group, or a combination thereof.

Aspect 7. The thermoplastic composition of any one of the preceding aspects, wherein the flame retardant comprises a phosphazene, a phosphonitrilic chloride, a phosphorus ester amide, a phosphoric acid amide, a phosphonic acid amide, a phosphinic acid amide, tris(aziridinyl) phosphine oxide, or a combination thereof.

Aspect 8. The thermoplastic composition of any one of the preceding aspects, wherein the flame retardant is of formula (18) or (19) 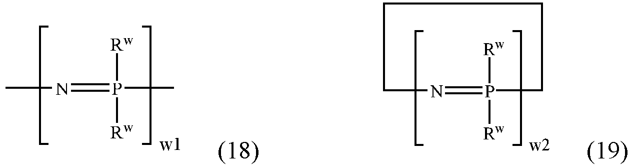 wherein w1 is 3 to 10,000 and w2 is 3 to 25, preferably 3 to 7, and each occurrence of R^{w} is independently a C₁₋₁₂ alkyl, alkenyl, alkoxy, aryl, aryloxy, or polyoxyalkylene group, wherein at least one hydrogen atom is optionally substituted with a group having an N, S, O, or F atom, or an amino group

Aspect 9. The thermoplastic composition of any one of the preceding aspects, wherein the auxiliary polycarbonate comprises 5-15 wt% of a branched homopolycarbonate comprising 0.2-1.0 mole % branching agent; up to 70 wt% of a polycarbonate derived from post-consumer recycled or post-industrial recycled material, up to 70 wt% of a polycarbonate different from the branched homopolycarbonate comprising 0.2-1.0 mole % branching agent and the polycarbonate derived from post-consumer recycled or post-industrial recycled material, or a combination thereof

Aspect 10. The thermoplastic composition of any one of the preceding aspects, wherein one or more of the highly branched polycarbonate comprising 1.5-5.0 mole % branching, the poly(carbonate-siloxanes), and the auxiliary polycarbonate are derived from post-consumer recycled or post-industrial recycled materials or can be produced from at least one monomer derived from bio-based or plastic waste feedstock.

Aspect 11. The thermoplastic composition of any one of the preceding aspects comprising 20-80 wt% of highly branched polycarbonate comprising 1.5-5.0 mole % branching, wherein the highly branched polycarbonate has a weight average molecular weight of 25,000-45,000 grams per mole, as determined by gel permeation chromatography, according to polystyrene standards and calculated for polycarbonate; up to 10 wt% of a first poly(carbonate siloxane) having 30-70 wt% siloxane, 4-15 wt% of a second poly(carbonate siloxane) having 5 to 15 wt% siloxane, and a phosphazene flame retardant present in an amount effective to provide up to 0.6 wt% phosphorous; optionally, up to 70 wt% of an auxiliary polycarbonate comprising 5-15 wt% of a branched homopolycarbonate comprising 0.3-1.0 mole % branching agent; up to 70 wt% of a polycarbonate derived from post-consumer recycled or post-industrial recycled material, up to 70 wt% of a polycarbonate different from the branched homopolycarbonate comprising 0.3-1.0 mole % branching agent and the polycarbonate derived from post-consumer recycled or post-industrial recycled material, or a combination thereof.

Aspect 12. The thermoplastic composition of any one of the preceding aspects, comprising 20-80 wt% of highly branched polycarbonate comprising 1.5-5.0 mole % branching, wherein the highly branched polycarbonate has a weight average molecular weight of 25,000-45,000 grams per mole, as determined by gel permeation chromatography, according to polystyrene standards and calculated for polycarbonate; 1-6 wt% of a first poly(carbonate siloxane) having a siloxane content of 30-70 wt%, wherein the first poly(carbonate siloxane) has a weight average molecular weight of 33,000-45,000 grams per mole, as determined by gel permeation chromatography, according to polystyrene standards and calculated for polycarbonate, 5-15 wt% of a second poly(carbonate siloxane) having a siloxane content of 5-15 wt%, and 1-4 wt% of a phosphazene flame retardant; a branched homopolycarbonate comprising 1-10 mole % branching, wherein the branched homopolycarbonate comprises functional groups, optionally, up to 70 wt% of an auxiliary polycarbonate comprising a polycarbonate derived from post-consumer recycled or post-industrial recycled material, a polycarbonate different from the polycarbonate derived from post-consumer recycled or post-industrial recycled material, or a combination thereof.

Aspect 13. A method of making the thermoplastic composition of any one of the preceding aspects, the method comprising melt-mixing the components of the composition.

Aspect 14. The method of aspect 14, further comprising molding, casting, or extruding the composition to provide the article.

Aspect 15. An article comprising the thermoplastic composition of any one of the preceding aspects.

The compositions, methods, and articles can alternatively comprise, consist of, or consist essentially of, any appropriate materials, steps, or components herein disclosed. The compositions, methods, and articles can additionally, or alternatively, be formulated so as to be devoid, or substantially free, of any materials (or species), steps, or components, that are otherwise not necessary to the achievement of the function or objectives of the compositions, methods, and articles.

All ranges disclosed herein are inclusive of the endpoints, and the endpoints are independently combinable with each other (e.g., ranges of "up to 25 wt%, or, more specifically, 5 wt% to 20 wt%", is inclusive of the endpoints and all intermediate values of the ranges of "5 wt% to 25 wt%," etc.). "Combinations" is inclusive of blends, mixtures, alloys, reaction products, and the like. The terms "first," "second," and the like, do not denote any order, quantity, or importance, but rather are used to distinguish one element from another. The terms "a" and "an" and "the" do not denote a limitation of quantity and are to be construed to cover both the singular and the plural, unless otherwise indicated herein or clearly contradicted by context. "Or" means "and/or" unless clearly stated otherwise. Reference throughout the specification to "some embodiments", "an embodiment", and so forth, means that a particular element described in connection with the embodiment is included in at least one embodiment described herein, and may or may not be present in other embodiments. In addition, it is to be understood that the described elements may be combined in any suitable manner in the various embodiments. A "combination thereof" is open and includes any combination comprising at least one of the listed components or properties optionally together with a like or equivalent component or property not listed

Unless specified to the contrary herein, all test standards are the most recent standard in effect as of the filing date of this application, or, if priority is claimed, the filing date of the earliest priority application in which the test standard appears.

Unless defined otherwise, technical and scientific terms used herein have the same meaning as is commonly understood by one of skill in the art to which this application belongs.

Compounds are described using standard nomenclature. For example, any position not substituted by any indicated group is understood to have its valency filled by a bond as indicated, or a hydrogen atom. A dash that is not between two letters or symbols is used to indicate a point of attachment for a substituent. For example, -CHO is attached through carbon of the carbonyl group.

The term "alkyl" means a branched or straight chain, unsaturated aliphatic hydrocarbon group, e.g., methyl, ethyl, n-propyl, i-propyl, n-butyl, s-butyl, t-butyl, n-pentyl, s-pentyl, and n- and s-hexyl. "Alkenyl" means a straight or branched chain, monovalent hydrocarbon group having at least one carbon-carbon double bond (e.g., ethenyl (-HC=CH₂)). "Alkoxy" means an alkyl group that is linked via an oxygen (i.e., alkyl-O-), for example methoxy, ethoxy, and sec-butyloxy groups. "Alkylene" means a straight or branched chain, saturated, divalent aliphatic hydrocarbon group (e.g., methylene (-CH₂-) or, propylene (-(CH₂)₃-)). "Cycloalkylene" means a divalent cyclic alkylene group, -CₙH₂ₙ₋ₓ, wherein x is the number of hydrogens replaced by cyclization(s). "Cycloalkenyl" means a monovalent group having one or more rings and one or more carbon-carbon double bonds in the ring, wherein all ring members are carbon (e.g., cyclopentyl and cyclohexyl). "Aryl" means an aromatic hydrocarbon group containing the specified number of carbon atoms, such as phenyl, tropone, indanyl, or naphthyl. "Arylene" means a divalent aryl group. "Alkylarylene" means an arylene group substituted with an alkyl group. "Arylalkylene" means an alkylene group substituted with an aryl group (e.g., benzyl). The prefix "halo" means a group or compound including one more of a fluoro, chloro, bromo, or iodo substituent. A combination of different halo groups (e.g., bromo and fluoro), or only chloro groups can be present. The prefix "hetero" means that the compound or group includes at least one ring member that is a heteroatom (e.g., 1, 2, or 3 heteroatom(s)), wherein the heteroatom(s) is each independently N, O, S, Si, or P. "Substituted" means that the compound or group is substituted with at least one (e.g., 1, 2, 3, or 4) substituents that can each independently be a C₁₋₉ alkoxy, a C₁₋₉ haloalkoxy, a nitro (-NO₂), a cyano (-CN), a C₁₋₆ alkyl sulfonyl (-S(=O)₂-alkyl), a C₆₋₁₂ aryl sulfonyl (-S(=O)₂-aryl)a thiol (-SH), a thiocyano (-SCN), a tosyl (CH₃C₆H₄SO₂-), a C₃₋₁₂ cycloalkyl, a C₂₋₁₂ alkenyl, a C₅₋₁₂ cycloalkenyl, a C₆₋₁₂ aryl, a C₇₋₁₃ arylalkylene, a C₄₋₁₂ heterocycloalkyl, and a C₃₋₁₂ heteroaryl instead of hydrogen, provided that the substituted atom's normal valence is not exceeded. The number of carbon atoms indicated in a group is exclusive of any substituents. For example -CH₂CH₂CN is a C₂ alkyl group substituted with a nitrile.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A thermoplastic composition comprising
a highly branched polycarbonate comprising 1.5-5.0 mole % branching, wherein the highly branched polycarbonate has a weight average molecular weight of 25,000-45,000 grams per mole, as determined by gel permeation chromatography, according to polystyrene standards and calculated for polycarbonate;
a branched polycarbonate comprising 0.1-1.0 mole % branching, wherein the branched polycarbonate has a weight average molecular weight of 25,000-45,000 grams per mole, as determined by gel permeation chromatography, according to polystyrene standards and calculated for polycarbonate;
a first poly(carbonate siloxane) having 30-70 wt% siloxane,
a second poly(carbonate siloxane) having 5-15 wt% siloxane, and
wherein the total siloxane content provided to the thermoplastic composition by the first and second poly(carbonate-siloxanes) is less than 4.17 wt%; and
wherein the ratio of the siloxane content provided to the thermoplastic composition by the first poly(carbonate siloxane) to the siloxane content provided to the thermoplastic composition by the second poly(carbonate siloxane) is less than 6.7 to 1,
a flame retardant comprising a phosphorous-nitrogen bond;
optionally, an auxiliary polycarbonate.

2. The thermoplastic composition of claim 1, wherein
the calculated bromine and chlorine content of the thermoplastic composition are each 900 ppm or less and the calculated total halogen content of the thermoplastic composition is 1500 ppm or less; or
the calculated bromine, chlorine, and fluorine content of the thermoplastic composition are each 900 ppm or less and the calculated total bromine, chlorine, and fluorine content of the thermoplastic composition is 1500 ppm or less.

3. The thermoplastic composition of claim 1 or claim 2, wherein a molded sample of the composition has
a percent transmission of at least 80% as determined according to ASTM D1003 on a molded sample having a thickness of 0.8 mm,
a UL94 flame test rating of V-0 or V-1 on a molded sample having a thickness of 0.8 mm, and
a Notched Izod Impact strength of at least 600 Joules per meter as determined according to ASTM 256 at 23 °C.

4. The thermoplastic composition of any one of the preceding claims comprising
20-80 wt% of a highly branched polycarbonate comprising 1.5-5.0 mole % branching, wherein the highly branched polycarbonate has a weight average molecular weight of 25,000-45,000 g/mole, as determined by gel permeation chromatography, according to polystyrene standards and calculated for polycarbonate;
up to 10 wt% of a first poly(carbonate siloxane) having 30-70 wt% siloxane,
4-15 wt% of a second poly(carbonate siloxane) having 5 to 15 wt% siloxane, and
a flame retardant comprising a phosphorous-nitrogen bond present in an amount effective to provide up to 0.6 wt% phosphorous, based on the total weight of the composition;
optionally, up to 70 wt% of an auxiliary polycarbonate.

5. The thermoplastic composition of any one of the preceding claims, wherein the functional groups are derived from an end-capping agent having a pKa between 8.3 and 11.

6. The thermoplastic composition of any one of the preceding claims, wherein the functional groups comprise a phenol substituted with a cyano group, an olefin group, a halogen, an ester group, or a combination thereof.

7. The thermoplastic composition of any one of the preceding claims, wherein the flame retardant comprises a phosphazene, a phosphonitrilic chloride, a phosphorus ester amide, a phosphoric acid amide, a phosphonic acid amide, a phosphinic acid amide, tris(aziridinyl) phosphine oxide, or a combination thereof.

8. The thermoplastic composition of any one of the preceding claims, wherein the flame retardant is of formula (18) or (19) 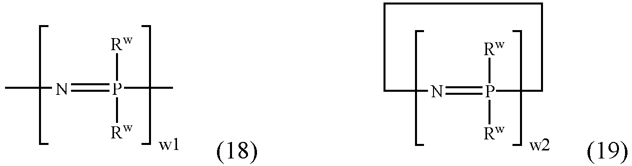
wherein w1 is 3 to 10,000 and w2 is 3 to 25, preferably 3 to 7, and
each occurrence of R^{w} is independently a C₁₋₁₂ alkyl, alkenyl, alkoxy, aryl, aryloxy, or polyoxyalkylene group, wherein at least one hydrogen atom is optionally substituted with a group having an N, S, O, or F atom, or an amino group.

9. The thermoplastic composition of any one of the preceding claims, wherein the auxiliary polycarbonate comprises
5-15 wt% of a branched homopolycarbonate comprising 0.2-1.0 mole % branching agent; up to 70 wt% of a polycarbonate derived from post-consumer recycled or post-industrial recycled material,
up to 70 wt% of a polycarbonate different from the branched homopolycarbonate comprising 0.2-1.0 mole % branching agent and the polycarbonate derived from post-consumer recycled or post-industrial recycled material,
or a combination thereof.

10. The thermoplastic composition of any one of the preceding claims, wherein one or more of the highly branched polycarbonate comprising 1.5-5.0 mole % branching, the poly(carbonate-siloxanes), and the auxiliary polycarbonate are derived from post-consumer recycled or post-industrial recycled materials or can be produced from at least one monomer derived from bio-based or plastic waste feedstock.

11. The thermoplastic composition of any one of the preceding claims comprising
20-80 wt% of highly branched polycarbonate comprising 1.5-5.0 mole % branching, wherein the highly branched polycarbonate has a weight average molecular weight of 25,000-45,000 grams per mole, as determined by gel permeation chromatography, according to polystyrene standards and calculated for polycarbonate;
up to 10 wt% of a first poly(carbonate siloxane) having 30-70 wt% siloxane,
4-15 wt% of a second poly(carbonate siloxane) having 5 to 15 wt% siloxane, and
a phosphazene flame retardant present in an amount effective to provide up to 0.6 wt% phosphorous;
optionally, up to 70 wt% of an auxiliary polycarbonate comprising
5-15 wt% of a branched homopolycarbonate comprising 0.3-1.0 mole % branching agent;
up to 70 wt% of a polycarbonate derived from post-consumer recycled or post-industrial recycled material,
up to 70 wt% of a polycarbonate different from the branched homopolycarbonate comprising 0.3-1.0 mole % branching agent and the polycarbonate derived from post-consumer recycled or post-industrial recycled material,
or a combination thereof.

12. The thermoplastic composition of any one of the preceding claims, comprising
20-80 wt% of highly branched polycarbonate comprising 1.5-5.0 mole % branching, wherein the highly branched polycarbonate has a weight average molecular weight of 25,000-45,000 grams per mole, as determined by gel permeation chromatography, according to polystyrene standards and calculated for polycarbonate;
1-6 wt% of a first poly(carbonate siloxane) having a siloxane content of 30-70 wt%, wherein the first poly(carbonate siloxane) has a weight average molecular weight of 33,000-45,000 grams per mole, as determined by gel permeation chromatography, according to polystyrene standards and calculated for polycarbonate,
5-15 wt% of a second poly(carbonate siloxane) having a siloxane content of 5-15 wt%, and
1-4 wt% of a phosphazene flame retardant;
a branched homopolycarbonate comprising 1-10 mole % branching, wherein the branched homopolycarbonate comprises functional groups,
optionally, up to 70 wt% of an auxiliary polycarbonate comprising a polycarbonate derived from post-consumer recycled or post-industrial recycled material, a polycarbonate different from the polycarbonate derived from post-consumer recycled or post-industrial recycled material, or a combination thereof.

13. A method of making the thermoplastic composition of any one of the preceding claims, the method comprising melt-mixing the components of the composition.

14. The method of claim 13, further comprising molding, casting, or extruding the composition to provide the article.

15. An article comprising the thermoplastic composition of any one claims 1-12.

## Patentansprüche

1. Thermoplastische Zusammensetzung, aufweisend
ein hochgradig verzweigtes Polycarbonat, das 1,5-5,0 Mol-% Verzweigungsmittel enthält, wobei das hochgradig verzweigte Polycarbonat ein gewichtsmittleres Molekulargewicht von 25.000-45.000 Gramm pro Mol aufweist, wie durch Gelpermeationschromatographie gemäß Polystyrolstandards bestimmt und für Polycarbonat berechnet;
ein verzweigtes Polycarbonat, das 0,1-1,0 Mol-% Verzweigungsmittel enthält, wobei das verzweigte Polycarbonat ein gewichtsmittleres Molekulargewicht von 25.000-45.000 Gramm pro Mol aufweist, wie durch Gelpermeationschromatographie gemäß Polystyrolstandards bestimmt und für Polycarbonat berechnet;
ein erstes Poly(carbonatsiloxan) mit 30-70 Gew.-% Siloxan,
ein zweites Poly(carbonatsiloxan) mit 5-15 Gew.-% Siloxan, und
wobei der gesamte der thermoplastischen Zusammensetzung durch das erste und zweite Poly(carbonat-siloxan) zugeführte Siloxangehalt weniger als 4,17 Gew.-% beträgt; und
wobei das Verhältnis des der thermoplastischen Zusammensetzung durch das erste Poly(carbonatsiloxan) zugeführten Siloxangehalts zu dem der thermoplastischen Zusammensetzung durch das zweite Poly(carbonatsiloxan) zugeführten Siloxangehalt weniger als 6,7 zu 1 beträgt,
ein flammhemmendes Mittel, das eine Phosphor-Stickstoff-Bindung enthält;
optional ein zusätzliches Polycarbonat.

2. Thermoplastische Zusammensetzung nach Anspruch 1, wobei
der berechnete Brom- und Chlorgehalt der thermoplastischen Zusammensetzung jeweils 900 ppm oder weniger beträgt und der berechnete gesamte Halogengehalt der thermoplastischen Zusammensetzung 1500 ppm oder weniger beträgt; oder
der berechnete Brom-, Chlor- und Fluorgehalt der thermoplastischen Zusammensetzung jeweils 900 ppm oder weniger beträgt und der berechnete gesamte Brom-, Chlor- und Fluorgehalt der thermoplastischen Zusammensetzung 1500 ppm oder weniger beträgt.

3. Thermoplastische Zusammensetzung nach Anspruch 1 oder Anspruch 2, wobei ein geformtes Muster der Zusammensetzung
eine prozentuale Durchlässigkeit von mindestens 80 %, bestimmt nach ASTM D1003 an einem geformten Muster mit einer Dicke von 0,8 mm,
eine UL94-Flammtest-Einstufung von V-0 oder V-1 an einem geformten Muster mit einer Dicke von 0,8 mm und
eine Izod Kerbschlagzähigkeit von mindestens 600 Joule pro Meter, bestimmt nach ASTM 256 bei 23 °C
hat.

4. Thermoplastische Zusammensetzung nach einem der vorstehenden Ansprüche, aufweisend
20-80 Gew.-% eines hochgradig verzweigten Polycarbonats, das 1,5-5,0 Mol-% Verzweigungsmittel enthält, wobei das hochgradig verzweigte Polycarbonat ein gewichtsmittleres Molekulargewicht von 25.000-45.000 g/mol aufweist, wie durch Gelpermeationschromatographie gemäß Polystyrol-Standards bestimmt und für Polycarbonat berechnet;
bis zu 10 Gew.-% eines ersten Poly(carbonatsiloxans) mit 30-70 Gew.-% Siloxan,
4-15 Gew.-% eines zweiten Poly(carbonatsiloxans) mit 5 bis 15 Gew.-% Siloxan, und
ein Flammschutzmittel, das eine Phosphor-Stickstoff-Bindung in einer Menge enthält, die wirksam ist, um bis zu 0,6 Gew.-% Phosphor, bezogen auf das Gesamtgewicht der Zusammensetzung, bereitzustellen;
optional bis zu 70 Gew.-% eines zusätzlichen Polycarbonats.

5. Thermoplastische Zusammensetzung nach einem der vorstehenden Ansprüche, wobei die funktionellen Gruppen von einem Endverkappungsmittel mit einem pKs-Wert zwischen 8,3 und 11 abgeleitet sind.

6. Thermoplastische Zusammensetzung nach einem der vorstehenden Ansprüche, wobei die funktionellen Gruppen ein mit einer Cyanogruppe, einer Olefingruppe, einem Halogen, einer Estergruppe oder einer Kombination davon substituiertes Phenol aufweisen.

7. Thermoplastische Zusammensetzung nach einem der vorstehenden Ansprüche, wobei das Flammschutzmittel ein Phosphazen, ein Phosphornitrilchlorid, ein Phosphoresteramid, ein Phosphorsäureamid, ein Phosphonsäureamid, ein Phosphinsäureamid, ein Tris(aziridinyl)phosphinoxid oder eine Kombination davon aufweist.

8. Thermoplastische Zusammensetzung nach einem der vorstehenden Ansprüche, wobei das Flammschutzmittel die Formel (18) oder (19) 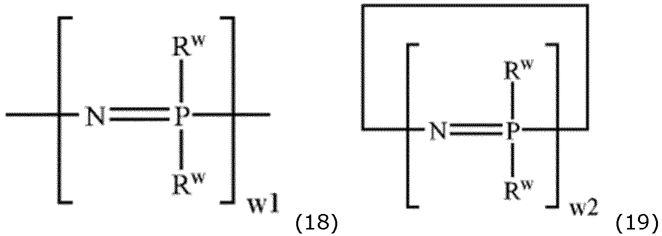 hat,
worin w1 3 bis 10.000 und w2 3 bis 25, vorzugsweise 3 bis 7, ist und jedes Auftreten von R^{w} unabhängig eine C₁₋₁₂ Alkyl-, Alkenyl-, Alkoxy-, Aryl-, Aryloxy- oder Polyoxyalkylengruppe ist, worin mindestens ein Wasserstoffatom optional mit einer Gruppe mit einem N-, S-, O- oder F-Atom oder einer Aminogruppe substituiert ist.

9. Thermoplastische Zusammensetzung nach einem der vorstehenden Ansprüche, wobei das zusätzliche Polycarbonat
5-15 Gew.-% eines verzweigten Homopolycarbonats, das 0,2-1,0 Mol-% Verzweigungsmittel enthält;
bis zu 70 Gew.-% eines Polycarbonats, das aus recyceltem nach-Verbraucher-recyceltem oder nach-Industrie-recyceltem Material hergestellt wurde,
bis zu 70 Gew.-% eines Polycarbonats, das sich von dem verzweigten Homopolycarbonat unterscheidet, das 0,2 bis 1,0 Mol-% Verzweigungsmittel enthält, und wobei das Polycarbonat aus recyceltem nach-Verbraucher-recyceltem oder nach-Industrie-recyceltem Material stammt,
oder eine Kombination davon aufweist.

10. Thermoplastische Zusammensetzung nach einem der vorstehenden Ansprüche, wobei eines oder mehrere der hochverzweigten Polycarbonate, die 1,5-5,0 Mol-% Verzweigungsmittel enthalten, die Poly(carbonatsiloxane) und das zusätzliche Polycarbonat aus nach-Verbraucher-recycelten oder nach-Industrie-recycelten Materialien stammen oder aus mindestens einem Monomer hergestellt werden können, das aus biobasiertem oder Kunststoffabfall-Ausgangsmaterial stammt.

11. Thermoplastische Zusammensetzung nach einem der vorstehenden Ansprüche, aufweisend
20-80 Gew.-% hochgradig verzweigtes Polycarbonat, das 1,5-5,0 Mol-% Verzweigungsmittel enthält, wobei das hochgradig verzweigte Polycarbonat ein gewichtsmittleres Molekulargewicht von 25.000-45.000 Gramm pro Mol aufweist, wie durch Gelpermeationschromatographie gemäß Polystyrolstandards bestimmt und für Polycarbonat berechnet;
bis zu 10 Gew.-% eines ersten Poly(carbonatsiloxans) mit 30-70 Gew.-% Siloxan,
4-15 Gew.-% eines zweiten Poly(carbonatsiloxans) mit 5 bis 15 Gew.-% Siloxan, und
ein Phosphazen-Flammschutzmittel, das in einer Menge vorhanden ist, die bis zu 0,6 Gew.-% Phosphor liefert;
optional
bis zu 70 Gew.-% eines zusätzlichen Polycarbonats, das 5-15 Gew.-% eines verzweigten Homopolycarbonats umfasst, das 0,3-1,0 Mol-% Verzweigungsmittel enthält; bis zu 70 Gew.-% eines Polycarbonats, das aus nach-Verbraucher-recyceltem oder nach-Industrie-recyceltem Material stammt,
bis zu 70 Gew.-% eines Polycarbonats, das sich von dem verzweigten Homopolycarbonat unterscheidet, das 0,3-1,0 Mol-% Verzweigungsmittel enthält, und das Polycarbonat, das aus recyceltem Post-Verbraucher- oder postindustriellem recyceltem Material stammt, oder eine Kombination davon.

12. Thermoplastische Zusammensetzung nach einem der vorstehenden Ansprüche, aufweisend
20-80 Gew.-% hochgradig verzweigtes Polycarbonat, das 1,5-5,0 Mol-% Verzweigungsmittel enthält, wobei das hochgradig verzweigte Polycarbonat ein gewichtsmittleres Molekulargewicht von 25.000-45.000 Gramm pro Mol aufweist, wie durch Gelpermeationschromatographie gemäß Polystyrolstandards bestimmt und für Polycarbonat berechnet;
1-6 Gew.-% eines ersten Poly(carbonatsiloxans) mit einem Siloxangehalt von 30-70 Gew.-%, wobei das erste Poly(carbonatsiloxan) ein gewichtsmittleres Molekulargewicht von 33.000-45.000 Gramm pro Mol aufweist, wie durch Gelpermeationschromatographie gemäß Polystyrolstandards bestimmt und für Polycarbonat berechnet,
5-15 Gew.-% eines zweiten Poly(carbonatsiloxans) mit einem Siloxangehalt von 5-15 Gew.-%, und
1-4 Gew.-% eines Phosphazen-Flammschutzmittels;
ein verzweigtes Homopolycarbonat, das 1-10 Mol-% Verzweigungsmittel enthält, wobei das verzweigte Homopolycarbonat funktionelle Gruppen enthält,
optional bis zu 70 Gew.-% eines zusätzlichen Polycarbonats, das ein Polycarbonat aus nach-Verbraucher-recyceltem oder nach-Industrie-recyceltem Material, ein Polycarbonat, das sich von dem Polycarbonat aus nach-Verbraucher-recyceltem oder nach-Industrie-recyceltem Material unterscheidet, oder eine Kombination davon umfasst.

13. Verfahren zur Herstellung der thermoplastischen Zusammensetzung nach einem der vorstehenden Ansprüche, wobei das Verfahren das Schmelzmischen der Komponenten der Zusammensetzung umfasst.

14. Verfahren nach Anspruch 13, des Weiteren umfassend das Formen, Gießen oder Extrudieren der Zusammensetzung, um den Gegenstand bereitzustellen.

15. Gegenstand, der die thermoplastische Zusammensetzung nach einem der Ansprüche 1-12.

## Revendications

1. Composition thermoplastique comprenant
un polycarbonate hautement ramifié comprenant 1,5-5,0 % en mole de ramification, lequel polycarbonate hautement ramifié a une masse molaire moyenne de 25 000-45 000 grammes par mole, telle que déterminé par chromatographie à perméation de gel, selon des standards de polystyrène et calculée pour du polycarbonate ;
un polycarbonate ramifié comprenant 0,1-1,0 % en mole de ramification, lequel polycarbonate ramifié a une masse molaire moyenne de 25 000-45 000 grammes par mole, telle que déterminée par chromatographie à perméation de gel, selon des standards de polystyrène et calculée pour du polycarbonate ;
un premier poly(carbonate siloxane) ayant 30-70 % en poids de siloxane,
un second poly(carbonate siloxane) ayant 5-15 % en poids de siloxane, et
où la teneur totale en siloxane apportée à la composition thermoplastique par le premier et le second poly(carbonate siloxanes) est inférieure à 4,17 % en poids ; et
où le rapport entre la teneur en siloxane apportée à la composition thermoplastique par le premier poly(carbonate siloxane) et la teneur en siloxane apportée à la composition thermoplastique par le second poly(carbonate siloxane) est inférieur à 6,7 pour 1,
un retardateur de flamme comprenant une liaison phosphore-azote ;
de façon facultative, un polycarbonate auxiliaire.

2. Composition thermoplastique selon la revendication 1, dans laquelle
les teneurs calculées en brome et en chlore de la composition thermoplastique sont chacune de 900 ppm ou moins, et la teneur totale calculée en halogènes de la composition thermoplastique est de 1 500 ppm ou moins ; ou
les teneurs calculées en brome, en chlore et en fluor de la composition thermoplastique sont chacune de 900 ppm ou moins, et la teneur totale calculée en brome, en chlore et en fluor de la composition thermoplastique est de 1 500 ppm ou moins.

3. Composition thermoplastique selon la revendication 1 ou la revendication 2,
dans laquelle un échantillon moulé de la composition a
un pourcentage de transmission d'au moins 80 % tel que déterminé selon la norme ASTM D1003 sur un échantillon moulé ayant une épaisseur de 0,8 mm,
un classement de résistance au feu UL94 de V-0 ou V-1 sur un échantillon moulé ayant une épaisseur de 0,8 mm, et
une résistance au choc Izod d'éprouvettes entaillées d'au moins 600 joules par mètre telle que déterminée selon la norme ASTM256 à 23 °C.

4. Composition thermoplastique selon l'une quelconque des revendications précédentes comprenant
20-80 % en poids d'un polycarbonate hautement ramifié comprenant 1,5-5,0 % en mole de ramification, lequel polycarbonate hautement ramifié a une masse molaire moyenne de 25 000-45 000 g/mole, telle que déterminée par chromatographie à perméation de gel, selon des standards de polystyrène et calculée pour du polycarbonate ;
jusqu'à 10 % en poids d'un premier poly(carbonate siloxane) contenant 30-70 % en poids de siloxane,
4-15 % en poids d'un second poly(carbonate siloxane) contenant 5 à 15 % en poids de siloxane, et
un retardateur de flamme comprenant une liaison phosphore-azote présente en quantité suffisante pour fournir jusqu'à 0,6 % en poids de phosphore, par rapport au poids total de la composition ;
de façon facultative, jusqu'à 70 % en poids d'un polycarbonate auxiliaire.

5. Composition thermoplastique selon l'une quelconque des revendications précédentes, dans laquelle les groupes fonctionnels sont dérivés d'un agent de coiffage en position terminale ayant un pKa compris entre 8,3 et 11.

6. Composition thermoplastique selon l'une quelconque des revendications précédentes, dans laquelle les groupes fonctionnels comprennent un phénol substitué par un groupe cyano, un groupe oléfine, un halogène, un groupe ester, ou une combinaison de ceux-ci.

7. Composition thermoplastique selon l'une quelconque des revendications précédentes, dans laquelle le retardateur de flamme comprend un phosphazène, un chlorure phosphonitrilique, un amide d'ester de phosphore, un amide d'acide phosphorique, un amide d'acide phosphonique, un amide d'acide phosphinique, un oxyde de tris(aziridinyl) phosphine, ou une combinaison de ceux-ci.

8. Composition thermoplastique selon l'une quelconque des revendications précédentes, dans laquelle le retardateur de flamme est de formule (18) ou (19) 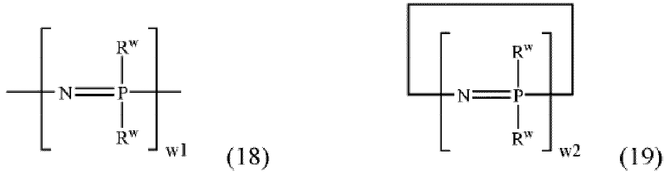
où w1 vaut de 3 à 10 000 et w2 vaut de 3 à 25, de préférence de 3 à 7, et
chaque occurrence de R^{w} est indépendamment un groupe en C₁₋₁₂ alkyle, alcényle, alcoxy, aryle, aryloxy ou polyoxyalkylène, dans lequel au moins un atome d'hydrogène est de façon facultative substitué par un groupe ayant un atome N, S, 0, ou F, ou un groupe amino.

9. Composition thermoplastique selon l'une quelconque des revendications précédentes, dans laquelle le polycarbonate auxiliaire comprend
5-15 % en poids d'un homopolycarbonate ramifié comprenant 0,2-1,0 % en mole d'agent de ramification ;
jusqu'à 70 % en poids d'un polycarbonate dérivé d'un matériau recyclé après consommation ou d'un matériau post-industriel recyclé,
jusqu'à 70 % en poids d'un polycarbonate différent de l'homopolycarbonate ramifié comprenant 0,2-1,0 % en mole d'agent de ramification, et du polycarbonate dérivé d'un matériau recyclé après consommation ou d'un matériau post-industriel recyclé, ou
une combinaison de ceux-ci.

10. Composition thermoplastique selon l'une quelconque des revendications précédentes, dans laquelle un ou plusieurs des polycarbonates hautement ramifiés comprenant 1,5-5,0 % en mole de ramification, les poly(carbonate siloxanes), et le polycarbonate auxiliaire sont dérivés d'un matériau recyclé après consommation ou d'un matériau post-industriel recyclé, ou peuvent être produits à partir d'au moins un monomère dérivé de matières premières biosourcées ou de déchets plastiques.

11. Composition thermoplastique selon l'une quelconque des revendications précédentes comprenant
20-80 % en poids de polycarbonate hautement ramifié comprenant 1,5-5,0 % en mole de ramification, dans lequel le polycarbonate hautement ramifié a une masse molaire moyenne de 25 000-45 000 grammes par mole, telle que déterminée par chromatographie à perméation de gel, selon des standards de polystyrène et calculée pour du polycarbonate ;
jusqu'à 10 % en poids d'un premier poly(carbonate siloxane) ayant 30-70 % en poids de siloxane,
4-15 % en poids d'un second poly(carbonate siloxane) ayant 5 à 15 % en poids de siloxane, et
un retardateur de flamme au phosphazène présent en quantité suffisante pour fournir jusqu'à 0,6 % en poids de phosphore ;
de façon facultative, jusqu'à 70 % en poids d'un polycarbonate auxiliaire comprenant
5-15 % en poids d'un homopolycarbonate ramifié comprenant 0,3-1,0 % en mole d'agent de ramification ;
jusqu'à 70 % en poids d'un polycarbonate dérivé d'un matériau recyclé après consommation ou d'un matériau post-industriel recyclé,
jusqu'à 70 % en poids d'un polycarbonate différent de l'homopolycarbonate ramifié comprenant 0,3-1,0 % en mole d'agent de ramification et du polycarbonate dérivé d'un matériau recyclé après consommation ou d'un matériau post-industriel recyclé,
ou une combinaison de ceux-ci.

12. Composition thermoplastique selon l'une quelconque des revendications précédentes, comprenant
20-80 % en poids de polycarbonate hautement ramifié comprenant 1,5-5,0 % en mole de ramification, lequel polycarbonate hautement ramifié a une masse molaire moyenne de 25 000-45 000 grammes par mole, telle que déterminée par chromatographie à perméation de gel, selon des standards de polystyrène et calculée pour du polycarbonate ;
1-6 % en poids d'un premier poly(carbonate siloxane) ayant une teneur en siloxane de 30-70 % en poids, lequel premier poly(carbonate siloxane) a une masse molaire moyenne de 33 000-45 000 grammes par mole, telle que déterminée par chromatographie à perméation de gel, selon des standards de polystyrène et calculée pour du polycarbonate,
5-15 % en poids d'un second poly(carbonate siloxane) ayant une teneur en siloxane de 5-15 % en poids, et
1-4 % en poids d'un retardateur de flamme au phosphazène ;
un homopolycarbonate ramifié comprenant 1-10 % en mole de ramification, lequel homopolycarbonate ramifié comprend des groupes fonctionnels,
de façon facultative, jusqu'à 70 % en poids d'un polycarbonate auxiliaire comprenant un polycarbonate dérivé d'un matériau recyclé après consommation ou d'un matériau post-industriel recyclé, un polycarbonate différent du polycarbonate dérivé d'un matériau recyclé après consommation ou d'un matériau post-industriel recyclé, ou une combinaison de ceux-ci.

13. Procédé de fabrication de la composition thermoplastique selon l'une quelconque des revendications précédentes, le procédé comprenant le mélange en phase fondue des composants de la composition.

14. Procédé selon la revendication 13, comprenant en outre le moulage, la coulée, ou l'extrusion de la composition pour fournir l'article.

15. Article comprenant la composition thermoplastique selon l'une quelconque des revendications 1 à 12.
